(19) Europäisches Patentamt / European Patent Office / Office européen des brevets

(11) **EP 3 532 260 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(21) Anmeldenummer: **17798164.4**

(22) Anmeldetag: **02.11.2017**

(51) Int Cl.:
**B29C 45/14** (2006.01)     **B29C 37/00** (2006.01)
**C08J 7/04** (2020.01)      **C08J 7/12** (2006.01)

(86) Internationale Anmeldenummer:
**PCT/EP2017/078092**

(87) Internationale Veröffentlichungsnummer:
**WO 2018/078189 (03.05.2018 Gazette 2018/18)**

(54) **VERBUNDFOLIE ZUR BESCHICHTUNGSSTOFFÜBERTRAGUNG, DEREN VERWENDUNG UND EIN VERFAHREN ZUR HERSTELLUNG DER VERBUNDFOLIE SOWIE EIN VERFAHREN ZUR HERSTELLUNG EINES BESCHICHTETEN KUNSTSTOFFBAUTEILES**

MULTILAYER FILM FOR THE TRANSFER OF COATING MATERIAL, USE OF THIS FILM AND A PROCESS FOR PREPARATION OF THIS FILM AS WELL AS A PROCESS FOR THE PREPARATION OF A COATED PLASTIC PART

FILM MULTICOUCHE POUR LE TRANSFERT DU MATÉRIAU D'ENDUIT, UTILISATION DE CE FILM ET PROCÉDÉ DE PRÉPARATION DE CE FILM AINSI QU'UN PROCÉDÉ DE PRÉPARATION D'UNE PIÈCE EN PLASTIQUE ENDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2016 DE 102016120781**

(43) Veröffentlichungstag der Anmeldung:
**04.09.2019 Patentblatt 2019/36**

(73) Patentinhaber: **Fraunhofer-Gesellschaft zur Förderung der angewandten Forschung e.V. 80686 München (DE)**

(72) Erfinder:
- **VISSING, Klaus-Dieter 28359 Bremen (DE)**
- **OTT, Matthias 28359 Bremen (DE)**
- **GRASSL, Gregor 21684 Stade (DE)**
- **HAUSCHILD, Bernd 28359 Bremen (DE)**

(74) Vertreter: **Eisenführ Speiser Patentanwälte Rechtsanwälte PartGmbB Postfach 10 60 78 28060 Bremen (DE)**

(56) Entgegenhaltungen:
**WO-A1-2014/124945     DE-A1-102007 010 071**
**US-A1- 2015 129 120     US-A1- 2015 290 852**

- **"ISO EN 527-1 - Plastics - Determination of tensile properties", INTERNATIONAL STANDARD ISO, XX, XX, Nr. ISO EN 527-1, 1. Januar 2012 (2012-01-01), Seiten 1-23, XP009186981, in der Anmeldung erwähnt**
- **"Plastics ISO 527-3", DEUTSCHE NORM,, Bd. 3, 1. Juli 2003 (2003-07-01), Seiten 1-10, XP003033242, in der Anmeldung erwähnt**

**Beschreibung**

Die Erfindung betrifft eine Verbundfolie zur Beschichtungsstoffübertragung, umfassend eine Trägerfolie aus Kunststoff, einen ausgehärteten Beschichtungsstoff und eine siliziumorganische Schicht, die zwischen der Trägerfolie und dem Beschichtungsstoff angeordnet ist. Die Erfindung betrifft ferner die Verwendung einer erfindungsgemäßen Verbundfolie zur Übertragung eines Beschichtungsstoffes auf ein Kunststoffbauteil, sowie ein Verfahren zur Herstellung einer erfindungsgemäßen Verbundfolie. Des Weiteren betrifft die Erfindung auch ein Verfahren zur Herstellung eines beschichteten Kunststoffbauteiles, wobei die erfindungsgemäße Verbundfolie eingesetzt wird.

Zur Herstellung von Kunststoffbauteilen, wie z. B. Faserverbund-Formbauteilen. wird häufig ein Vakuuminfusionsverfahren bzw. RTM-Verfahren (Resin Transfer Molding) verwendet. In beiden Verfahren wird ein herzustellendes Kunststoffbauteil, wie z. B. Faserverbund-Formbauteil, mittels Infusionieren (im Falle des Vakuuminfusionsverfahrens) bzw. Injizieren (z.B. im Falle eines RTM-Verfahrens) mit einem aushärtbaren Kunststoffmaterial versehen. Sollen die resultierenden Kunststoffbauteile nach dem Aushärten des aushärtbaren Kunststoffmaterials anschließend beschichtet, insbesondere lackiert, werden, so stehen heutzutage zwei grundsätzliche Möglichkeiten zur Verfügung:

a) Entweder wird das Bauteil nach entsprechender Reinigung und Vorbehandlung beschichtet, bzw. lackiert (Postlackierung)
oder

b) es wird eine In-Mold-Lackierung vorgenommen.

Bei einer In-Mold-Lackierung wird die Formoberfläche mit einem typischerweise dickflüssigen oder gelartigen Lacksystem versehen. Dieses Material lüftet ab und beginnt auszuhärten. Sodann wird der Lagenaufbau vorgenommen und das entsprechende Kunststoffbauteil, wie z. B. ein Faserverbund-Bauteil, hergestellt. Nach der zumeist thermischen Aushärtung sind sowohl das Harz als auch der in der In-Mold-Lackierung verwendete Lack ausgehärtet.

Beide Vorgehensweisen (sowohl Option a) als auch Option b)) verlängern und erschweren damit den Fertigungsablauf eines industriellen Herstellungsprozesses eines Kunststoffbauteils und führen somit zu Mehrkosten. Weiterhin ist ein erheblicher Aufwand zu betreiben, um die erforderliche Oberflächenqualität zu gewährleisten. Daher besteht ein Bedarf an einer Fertigungsmöglichkeit, die eine effektivere Beschichtung von Kunststoffbauteilen ermöglicht, insbesondere einer in den bereits verwendeten Herstellungsprozess integrierten Fertigungsmöglichkeit, ohne dass eine In-Mold-Lackierung der Form oder eine nachträgliche Beschichtung oder Lackierung des Kunststoffbauteils vorgenommen werden muss.

Idealerweise soll das Kunststoffbauteil im Sinne eines "One-shot-Vorganges", direkt mit einer gewünschten Oberflächenbeschichtung versehen werden, ohne dass die hergestellten Kunststoffbauteile nachträglich bewegt, gereinigt und lackiert werden müssen. Vorzugsweise ist der Beschichtungsvorgang des Kunststoffbauteils in den jeweiligen Herstellprozess, z.B. den RTM-Prozess oder das Vakuuminfusionsverfahren, integriert.

Lösungsansätze nach bisherigem Stand der Technik

In der DE 10 2007 010 071 A1 wird eine Folie mit einer plasmapolymeren Trennschicht ausgestattet, die eine bessere Haftfestigkeit zu der späteren Lackschicht aufweist als zu der Trägerfolie. Das lackierte Bauteil weist nach der Entfernung der Trägerfolie auf seiner Oberfläche die plasmapolymere Trennschicht auf und ist so u.a. schwer für einen weitergehenden Lackaufbau zu lackieren oder zu verkleben.

In der WO 2013/160437 A1 wird in der Form ein Schutzschichtsystem aufgetragen, welches eine Kunststofffolie und eine plasmapolymere siliziumorganische Schicht umfasst. Dabei haftet die plasmapolymere siliziumorganische Schicht nach einem Aushärtungsschritt stärker an der Kunststofffolie als an dem Kunststoffbauteil oder dem Kunststoffhalbzeug. Des Weiteren sind die Schichtdicke der plasmapolymeren siliziumorganischen Schicht sowie die Zusammensetzung der in der plasmapolymeren siliziumorganischen Schicht enthaltenden Elemente näher definiert. Lackmaterial als Beschichtungsstoff ist erwähnt, dieses Material ist aber nicht näher spezifiziert und soll vorzugsweise nicht im ausgehärteten Zustand eingesetzt werden. Das zugehörige Lackierverfahren arbeitet nach der oben erwähnten Option b.

In der WO2014/124945 A1 wird auf eine silikonbeschichtete Trennfolien (keine Plasmabeschichtung) mit besonderer Vakuumtiefziehfähigkeit in der Form zur Herstellung von Kunststoffbauteilen ein Lack aufgetragen. Es sind daher weiterhin Vorkehrungen gegen Overspray und Lösemittelemissionen zu treffen. In einer speziellen Ausgestaltung stellt die Kombination aus Schutzschichtsystem, ggf. Lack und Material für das Kunststoffbauteil bzw. das Kunststoffhalbzeug (Matrixmaterial) gemeinsam eine (wickelbare) Bahnware (Verbundfolie) dar, bei der das Matrixmaterial beispielsweise thermisch ausgehärtet werden kann, z.B. nach Einlegen in eine entsprechende Form. Aus dem dabei schon vor dem Aufwickeln aufgebrachten Matrixmaterial ergibt sich eine sehr eingeschränkte Dehnfähigkeit der Verbundfolie, insbesondere bei den angefügten Beispielen mit einem "Prepreg-Material" (vorimprägnierte Fasern). Für die In-Mold-Lackierung ohne die Kombination mit einem Matrix-Harz zur Kunststoffherstellung werden keine Lösungen angegeben. Ebenso wenig wird eine Lösung einen Folienverbund zur In-Mold-Lackierung zweidimensional nicht-ebener Kunststoff-Formbauteile angegeben, da die Lacke beim Einziehen in die dafür erforderlichen Formen reißen oder von der silikonbeschichtete Trennfolien abplatzen.

In der WO 2014/083732 A1 werden "In-Mold-Formungsverfahren" beschrieben. Die "harte Beschichtungsschicht" des resultierenden Formteils weist dabei eine sehr geringe Dehnbarkeit von nur 2 bis 40% auf (s. Anspruch 1).

In der EP 1177 875 A1 wird das Herstellen eines dekorierten Spritzgussformteils mit Hilfe einer tiefziehfähigen Folie mit "Release"-Eigenschaft, die farbig dekoriert und gegebenenfalls lackiert ist, beschrieben. Dabei wird beschrieben, eine Lackschicht mit extrem verformbaren UV-Lacken ohne Lösungsmittel, insbesondere Sol-Gel-Nanolacke, zu verwenden. Als bevorzugtes Material für die Folie wird PVA (Polyvinylalkohol) angegeben.

In der EP 1304235 A1 wird die Erzeugung einer strukturierten Lackschicht mittels einer Träger-Folie beschrieben. Dabei soll nach der Übertragung der Struktur in einem Spritzgussverfahren eine Träger-Folie mit "Release"-Eigenschaft abgezogen werden kann. Als Beispiele für die "Release"-Folie werden technische Thermoplaste, z.B. PET, Polypropylen, Polyethylen, oder Polyester mit PVA-Beschichtung genannt, die bevorzugt einen hohen Anteil an sog. Weichmachern enthält. Für die Erzeugung der "Release"-Eigenschaft wird lediglich auf die sog. "Release"-Technik (z. B. EP 0 573 676 A1) verwiesen, ohne einen näheren Hinweis darauf, wie die "Release"-Eigenschaft bereitgestellt werden kann.

Somit besteht insgesamt keine befriedigende Lösung die oben formulierten Anforderungen zu erfüllen.

Aufgabe der vorliegenden Erfindung war es daher, eine Möglichkeit anzugeben, mittels derer zuverlässig und insbesondere ohne die Notwendigkeit eines dem Herstellungsverfahren nachgelagerten Beschichtungsschrittes die Übertragung eines Beschichtungsstoffes in den Fertigungsablauf eines industriellen Herstellungsprozesses eines Kunststoffbauteils integriert werden kann. Insbesondere sollte die Übertragung eines Beschichtungsstoffes so integriert werden, dass keine zusätzlich zu den für den Fertigungsablauf des Herstellungsprozesses nötigen Maschinen und/oder Sicherheitsmaßnahmen notwendig sind, um die Beschichtungsstoffübertragung zu ermöglichen. Weiterhin sollte es möglich sein, den für das Kunststoffbauteilherstellungsverfahren vorbereiteten Verbund mit Beschichtungsstoff lange zu lagern.

Diese Aufgabe wird gelöst durch eine Verbundfolie zur Beschichtungsstoffübertragung, umfassend

    a) eine Trägerfolie aus Kunststoff,

    b) einen Beschichtungsstoff, der bei 23 °C eine Bruchdehnung zwischen 5% und 800% aufweist, bevorzugt zwischen 8% und 300%, besonders bevorzugt zwischen 18% und 150%, und

    c) eine siliziumorganische Schicht, die zwischen der Trägerfolie und dem Beschichtungsstoff angeordnet ist, wobei die Haftfestigkeit zwischen der siliziumorganischen Schicht und dem Beschichtungsstoff nach Aushärtung kleiner ist, als die Haftfestigkeit zwischen der siliziumorganischen Schicht und der Trägerfolie.

Eine siliziumorganische Schicht ist im Zusammenhang mit diesem Text eine Schicht, welche sowohl Si-Atome als auch C-Atome umfasst, bevorzugt besteht der Hauptteil der siliziumorganischen Schicht aus Si-Atomen, O-Atomen, N-Atomen, H-Atomen und C-Atomen, besonders bevorzugt nur aus Si-Atomen, O-Atomen, H-Atomen und C-Atomen.

Ein Beschichtungsstoff ist im Zusammenhang mit diesem Text vorzugsweise ein Material, welches auf einer Verbundfolie als Beschichtung vorliegt und auf ein anderes Medium, z.B. ein Kunststoffbauteil, übertragen werden kann. Bevorzugte Beschichtungsstoffe sind Lacke, Lacke mit metallischen Füllstoffen, Integralschäume, Schäume, Vulkanisate und Silikone.

Die Bruchdehnung im Sinne dieses Anmeldungstextes wird im Zweifelsfall nach DIN EN ISO 527-1 und 527-3 gemessen. Abweichend von dieser Norm werden an Stelle von "Folien" die Beschichtungsstoffe gemessen. Diese werden - ebenfalls abweichend von der Norm - in einer Dicke zwischen 25 und 70 $\mu$m gemessen, im Zweifelsfall bei einer Dicke von 50 $\mu$m.

Die Haftfestigkeitsverhältnisse nach Aushärtung werden nachfolgend auch "Zielhaftfestigkeitsverhältnisse" genannt.

Als Aushärtung eines Beschichtungsstoffs im Sinne dieser Erfindung soll die Filmbildung des Beschichtungsstoffs bezeichnet werden, unabhängig davon wie diese erfolgt ist. Es beinhaltet somit sowohl physikalische oder oxidative Trocknung wie auch die Filmbildung durch chemische Reaktionen wie beispielsweise Vernetzungsreaktionen. Bevorzugt ist dabei die Aushärtung durch chemische Reaktionen.

In diesem Anmeldungstext bedeutet der Ausdruck "Beschichtungsstoff mit einer Bruchdehnung" zwischen ... % und ... %, dass der Beschichtungsstoff bereits als Festkörper vorliegt und über eine Bruchdehnung im genannten Bereich verfügt. Dabei wird der Festkörper bevorzugt mittels eines chemischen Aushärtungsmechanismus, das heißt besonders bevorzugt unter der Ausbildung von kovalenten Bindungen, ausgehärtet.

Es ist jedoch nicht erforderlich aber bevorzugt, dass der Beschichtungsstoff zum Zeitpunkt seines technischen Einsatzes mit der Verbundfolie schon vollständig ausgehärtet ist.

Er kann daher gegebenenfalls noch in seiner Form verändert werden, bevor er einem finalen Aushärteprozess, z.B. durch Wärme oder Strahlung, unterzogen wird.

Unter dem Zustand "vollständig ausgehärtet" ist zu verstehen, dass das Kunststoffbauteil oder der Beschichtungsstoff im üblichen gebrauchsfertigen Zustand ist und somit im technischen Sinn vollständig ausgehärtet ist. Dies bedeutet bevorzugt, dass die Kettenbildung und Vernetzung im jeweiligen Polymer abgeschlossen ist.

Es ist im Sinne der Erfindung, dass die Bestimmung der Haftfestigkeit "nach Aushärtung" des Beschichtungsstoffes nicht unbedingt zum gleichen Zeitpunkt wie die Bestimmung der Bruchdehnung erfolgen muss: Es ist lediglich erforderlich, um das Merkmal c) der erfindungsgemäßen Lösung zu verwirklichen, dass die beschriebene Haftfestigkeit beziehungsweise die Haftfestigkeitsverhältnisse (Zielhaftfestigkeitsverhältnisse) durch Aushärtung des Beschichtungsstoffes eingestellt werden können. Hierfür ist es nicht erforderlich, dass der Beschichtungsstoff vollständig ausgehärtet ist, da es im Rahmen einer Verfahrensführung möglich ist, eine Trennung zum geeigneten Zeitpunkt (wenn die Kohäsionskräfte die Adhäsionskräfte übersteigen) vorzunehmen. Im Aushärtungszustand, in dem der Beschichtungsstoff das Merkmal c) der erfindungsgemäßen Lösung erfüllt, ist es auch nicht unbedingt erforderlich, dass dann noch die Bruchdehnung gemäß Merkmal b) der erfindungsgemäßen Lösung vorliegt. Erfindungsgemäß bevorzugt ist es jedoch, dass die Merkmale b) und c) der erfindungsgemäßen Lösung gleichzeitig verwirklicht sind, das heißt, dass der einzusetzende Beschichtungsstoff einen Aushärtegrad besitzt, bei dem sowohl die Bruchdehnung gemäß Merkmal b) der erfindungsgemäßen Lösung als auch die Haftungsverhältnisse gemäß Merkmal c) der erfindungsgemäßen Lösung verwirklicht sind.

Bevorzugt ist, dass das Merkmal c) der erfindungsgemäßen Lösung verwirklicht ist, wenn der Beschichtungsstoff vollständig ausgehärtet ist. Dies gilt ebenso für das Merkmal b).

Überraschenderweise hat sich herausgestellt, dass eine erfindungsgemäße Verbundfolie besonders gut geeignet ist, für die Herstellung von Kunststoffbauteilen im In-Mold-Verfahren. Dabei ist die erfindungsgemäße Verbundfolie für Tiefziehverfahren geeignet, sodass sie ideal in die Form für das zu erstellende Kunststoffbauteil eingefügt werden kann.

Bevorzugt ist, dass bei Trennung der Trägerfolie von dem Beschichtungsstoff ein vollständiger Adhäsionsbruch zwischen Beschichtungsstoff und siliziumorganische Schicht entsteht. Mit anderen Worten, ein Kohäsionsbruch innerhalb der siliziumorganischen Schicht und innerhalb des Beschichtungsstoffes wird vermieden.

Ein ungehärteter Beschichtungsstoff ist im Zusammenhang mit diesem Text ein flüssiges oder pastenartiges oder pulverförmiges Ausgangsprodukt, welches auf einem Untergrund aufgebracht (nach seiner Aushärtung) eine Beschichtung mit schützenden, dekorativen oder spezifischen technischen Eigenschaften ergibt. Dies könnte zum Beispiel ein ungehärteter Lack sein. Ungehärtete Lacke bzw. Beschichtungsstoffe können sowohl wasserlöslich als auch nichtwasserlöslich sein. Dies betrifft auch einen gehärteten Zustand des Lackes bzw. Beschichtungsstoffes. Bevorzugt ist der Lack bzw. Beschichtungsstoff im vollständig ausgehärteten Zustand nicht mehr löslich, insbesondere nicht mehr wasserlöslich.

In einer besonderen Ausführungsform kann die Oberfläche des Beschichtungsstoffes auf der Verbundfolie zusätzlich mit einem latent reaktiven Haftvermittler versehen sein, so dass beim Hinterspritzen mit Thermoplasten der Haftvermittler aktiviert wird und eine technisch relevante Haftung zwischen Beschichtungsstoff und Thermoplasten (Bauteil) erreicht wird.

Die Erfinder der vorliegenden Erfindung haben überraschenderweise herausgefunden, dass die Bruchdehnungswerte, wie sie Merkmal des Beschichtungsstoffes im Sinne der Erfindung sein müssen, der entscheidende Faktor sind, um

- einerseits die erforderliche Dehnbarkeit der erfindungsgemäßen Verbundfolie in einem Hinterschäumungsprozess, einem Gummierungsprozess (Vulkanisation), einem Spritzgussprozess oder einem Verfahren zur Herstellung von Faserverbundkunststoffen wie beispielsweise Pressverfahren, Vakuuminfusionsverfahren, RTM-Verfahren, Autoklavverfahren oder Handlaminieren zu gewährleisten, sodass sich die erfindungsgemäße Verbundfolie an die verwendete, zumeist doppelt gekrümmte Form lückenlos und gleichmäßig anpassen kann, und
- andererseits auch die Bedingungen für die Beschichtungsstoffübertragung sicherzustellen, was bei den oben genannten Bruchdehnungen nicht selbstverständlich ist.

Im Sinne der Erfindung ist es bevorzugt, dass auch die Trägerfolie aus Kunststoff über eine Bruchdehnung verfügt, die höher oder wenigstens gleich der des Beschichtungsstoffes im Sinne der vorliegenden Erfindung ist. Insbesondere bevorzugt ist, dass die Träger-folie aus Kunststoff über eine Bruchdehnung verfügt, in dem Bereich, wie sie oben für den Beschichtungsstoff und ganz besonders wie sie bevorzugt für den Beschichtungsstoff angegeben worden sind.

Besonders überraschend war, dass gegenüber der Trägerfolie und dem Beschichtungsstoff deutlich geringere Bruchdehnung der siliziumorganischen Schicht keine wesentliche Einschränkung für das Übertragen des Beschichtungsstoffes darstellt. Somit wird trotz hoher Dehnung eine ausreichende Adhäsionsfestigkeit zwischen dem Beschichtungsstoff und der siliciumorganischen Schicht sowie zwischen der siliciumorganischen Schicht und der Trägerfolie erreicht.

Auch wenn die WO 2014/124945 A1 ebenfalls mit Beschichtungsstoffen kombinierbare Foliensysteme beschreibt, so gibt sie doch keinen Hinweis, dass eine entsprechende Verbundfolie ausreichend dehnbar und damit tiefziehbar ist. Diese Eigenschaft der erfindungsgemäßen Verbundfolie ist tatsächlich überraschend: Um die Dehnbarkeit und somit auch die Tiefziehbarkeit der erfindungsgemäßen Verbundfolie aus Trägerfolie, siliziumorganischer (Trenn)Schicht und Beschichtungsstoff zu ermöglichen, müssen sämtliche Schichten der erfindungsgemäßen Verbundfolie zusammenwirken. So darf unter den für die Dehnbarkeit und somit auch für die Tiefziehbarkeit benötigten Bedingungen weder die Trägerfolie Risse noch der Beschichtungsstoff Risse oder Abplatzungen zeigen. Auch und gerade unter den Dehnungsbedingungen muss also gewährleistet sein, dass die Adhäsionskräfte aller Schichten zu dem bzw. den jeweiligen Nachbarn hoch genug sind, so dass sich der Beschichtungsstoff nicht vorzeitig und ungewollt ablöst. Dies gilt insbesondere für die Grenzfläche zwischen der siliziumorganische Schicht und der Trägerfolie. Andererseits muss nach der Bauteilherstellung gewährleistet sein, dass beim Entfernen der Trägerfolie die adhäsive Trennebene zwischen Plasmaschicht und Beschichtungsstoff angeordnet ist. Wichtig ist an dieser Stelle die hohe Kohäsionsfestigkeit von Plasmaschicht und Beschichtungsstoff.

Insbesondere gibt der Stand der Technik, einschließlich WO 2014/124945 A1, keine Hinweise darauf, dass

- einerseits unter Bedingung des Drückens durch eingeschossenes (eingespritzte) aushärtbares Kunststoffmaterial (bzw. Thermoplastschmelze)
  oder

- andererseits unter Bedingungen des (Vakuum-)Tiefziehens

in die Formkavität die siliziumorganische Schicht wie vorstehend definiert mit einem Beschichtungsstoff wie vorstehend definiert zusammenwirken muss, um eine ausreichende Dehnbarkeit und somit auch eine ausreichende Tiefziehbarkeit der erfindungsgemäßen Verbundfolie bei einem gleichzeitigen Zusammenhalt der siliziumorganische Schicht mit dem Beschichtungsstoff zu gewährleisten. Insbesondere ist auch nicht offenbart, über welche Eigenschaften ein entsprechender Beschichtungsstoff und/oder eine entsprechende siliziumorganische Schicht verfügen müssen, damit die siliziumorganische Schicht von dem Beschichtungsstoff nach dem Aushärtungsschritt vorzugsweise rückstandsfrei gelöst werden kann.

Die erfindungsgemäße Verbundfolie kann zur Beschichtungsstoffübertragung verwendet werden und außerhalb der Form für die Fertigung des Kunststoffbauteils hergestellt werden, vorzugsweise in einem Rolle-zu-Rolle-Prozess (wie zum Beispiel in WO 1993/026143 A1 beschrieben). Die erfindungsgemäße Verbundfolie besteht aus einer Trägerfolie und einem darauf angeordneten Lacksystem, welches einen (festen) ausgehärteten Beschichtungsstoff und eine siliziumorganische Schicht umfasst. Dabei ist die erfindungsgemäße Verbundfolie dadurch gekennzeichnet, dass sie stark dehnfähig ist. Dies trifft auf die mit der siliziumorganischen Trennschicht versehenen Trägerfolie und insbesondere auf den aufgebrachten Beschichtungsstoff zu, sodass es bei dem Dehnungsvorgang weder zu Rissen im Beschichtungsstoff noch zu einer Delamination des Beschichtungsstoffes von der siliziumorganische Trennschicht auf der Trägerfolie kommt.

Durch die Dehnfähigkeit (experimentell durch die Bruchdehnung bestimmt, für die entsprechende Messmethode siehe weiter unten unter Beispiele) der erfindungsgemäßen Verbundfolie, insbesondere durch die Dehnfähigkeit des Beschichtungsstoffes der erfindungsgemäßen Verbundfolie, ist es möglich, dass sich die erfindungsgemäße Verbundfolie auch einer komplexen dreidimensionalen Formgeometrie anpassen kann und zwar bevorzugt ohne einen zusätzlichen Erwärmungsschritt, welcher die erfindungsgemäße Verbundfolie dehnbarer macht. Die erfindungsgemäße Verbundfolie wird bevorzugt im Zuge eines Vakuumtiefziehprozesses auf die Formoberfläche gezogen oder mittels Drücken auf eine Formoberfläche eines formgebenden Werkzeuges gepresst, wie z.B. beim Hinterschäumen in einem RIM (reactive injection molding) Prozess.

Wie bereits oben angedeutet ist es bevorzugt, dass der erfindungsgemäß einzusetzende Beschichtungsstoff bei vollständiger Aushärtung bei 23°C über eine Bruchdehnung zwischen 5% und 800% verfügt, bevorzugt zwischen 8% und 300% und besonders bevorzugt zwischen 18% und 150%. Alternativ oder bevorzugt gleichzeitig verfügt die erfindungsgemäße Verbundfolie über die Eigenschaft, dass der vollständig ausgehärtete Beschichtungsstoff nach gemeinsamer Dehnung mit der Trägerfolie um 5%, bevorzugt 8% und weiter bevorzugt 18% sowie jeweils noch weiter bevorzugt 25%, 50%, 100%, 150%, 200%, und am meisten bevorzugt 250% (noch immer) an der Trägerfolie haftet, und wobei die Haftfestigkeit zwischen der siliziumorganischen Schicht und dem Beschichtungsstoff (noch immer) kleiner ist, als die Haftfestigkeit zwischen der siliziumorganischen Schicht und der Trägerfolie.

Es hat sich überraschenderweise herausgestellt, dass die erfindungsgemäße Verbundfolie über eine weiten Bereich dehnbar ist, ohne dass sich die Schichten voneinander lösen, ohne dass die Bruchdehnungsgrenze des Beschichtungsstoffes überschritten wird und ohne dass sich die angestrebten Haftungsverhältnisse der Schichten zueinander qualitativ verändern. Dies gilt insbesondere auch bevorzugt nach Aushärtung des Beschichtungsstoffes.

Zur Ermittlung dieser Haftung werden von der Verbundfolie Normzugprüfkörper in Anlehnung an die DIN 53 504:2009-10 Schulterstab S2 ausgestanzt. Die so entstandenen Prüfkörper werden an den dafür vorgesehenen Enden in eine Zugvorrichtung eingespannt und bei ca. 23 °C in Anlehnung an DIN 53504:2009-10 mit einer Dehnrate von ca. 15 mm/min gedehnt. Nach der Dehnung lässt sich die Haftung optisch durch die Betrachtung des gedehnten Bereichs leicht feststellen. Eine Haftung liegt auch nach der Dehnung vor, wenn keine Luft zwischen Beschichtungsstoff und Trägerfolie eingedrungen ist. Im Zweifelsfall wird dieser Bereich mit einem Mikroskop bei geringer Vergrößerung (5 bis 50 fach) genauer betrachtet. Ablösungen kann man beispielsweise erkennen an: Ablösung an Rissen im Beschichtungsstoff, Aufrollen des Beschichtungsstoffes von den Stanzkanten, Blasenbildung unter dem Beschichtungsstoff.

Der verwendete Beschichtungsstoff bzw. Lack ist vorzugsweise vollständig auf der Folie ausgehärtet und ist frei von Verlaufshilfsmitteln und anderen haftungsvermindernden Substanzen, sodass die Oberfläche des verwendeten Beschichtungsstoffes bzw. Lackes für den Bauteilfertigungsschritt den notwendigen Haftuntergrund liefern kann. Bevorzugt hat der Beschichtungsstoff eine Oberflächenenergie von > 35 mN/m ausgebildet. Weiter bevorzugt ist dabei der polare Anteil der Oberflächenenergie > 2,5 mN/m.

Die Haftfestigkeit des Beschichtungsstoffes auf der mit der siliziumorganischen Trennschicht versehenen Trägerfolie ist so eingestellt, dass es nicht zu einer vorzeitigen Ablösung bei der Verarbeitung im formgebenden Werkzeug kommt, jedoch nach dem Herstellungsprozess die Trägerfolie mit der siliziumorganischen Trennschicht der erfindungsgemäßen Verbundfolie vom entstandenen Bauteil rückstandsfrei entfernt werden kann. Eine erfindungsgemäße Verbundfolie ist daher eine Verbundfolie wie vorstehend definiert (oder wie vorstehend als bevorzugt definiert), wobei der Beschichtungsstoff im ungedehnten und gedehnten Zustand der erfindungsgemäßen Verbundfolie an der Trägerfolie welche mit der siliziumorganischen Trennschicht versehen ist, welche bevorzugt eine plasmapolymere Schicht ist, haftet. Die nötige Adhäsionsfestigkeit wird vorzugsweise durch das Aufbringen einer plasmapolymeren Schicht zwischen der Trägerfolie und dem Beschichtungsstoff erreicht (siehe auch weitere Ausführungen zur Verwendung einer geeigneten plasmapolymeren Schicht weiter unten).

Durch die Verwendung der erfindungsgemäßen Verbundfolie entfällt bevorzugt mindestens ein technischer Härtungsschritt des Beschichtungsstoffes bzw. Lackes während des Bauteilherstellungsprozesses mit Hilfe einer erfindungsgemäßen Verbundfolie. Dies vereinfacht den Prozessablauf des Herstellungsprozesses. Als Beispiel sei hier die In-Mold-Lackierung genannt mit den entsprechenden aufwändigen Vorkehrungen gegen beispielsweise Verschmutzung der Oberfläche, Overspray und Lösemittelemissionen sowie der langen Formbelegungszeit, da der In-Mold Lack einen Trocknungsgrad erreichen muss.

Im Gegensatz dazu erlaubt die Verwendung der erfindungsgemäßen Verbundfolie unmittelbar nach deren Einbringung in die Form die Herstellung des Kunststoffbauteils. Das so hergestellte Bauteil wird mit der Verbundfolie aus der Form entnommen, so dass das Formgebungswerkzeug unmittelbar für die Herstellung des nächsten Bauteils zur Verfügung steht. Eine Zwischenreinigung oder gar Eintrennung ist nicht notwendig.

Die Trägerfolie mit der darauf angeordneten siliziumorganischen Schicht kann unmittelbar nach der Bauteilentnahme entfernt werden oder aber als Schutz für Lagerung, Transport oder Weiterverarbeitung Verwendung finden.

In manchen Fällen ist es möglich, dass sich der bereits ausreichend ausgehärtete Beschichtungsstoff auf der resultierenden erfindungsgemäßen Verbundfolie aufgrund einer längeren Exposition zur Umgebungsluft noch weiter aushärtet. Die resultierende Verbundfolie dieses Vorgangs ist im Rahmen der vorliegenden Erfindung ebenfalls eine erfindungsgemäße Verbundfolie umfassend einen (noch weiter) ausgehärteten Beschichtungsstoff, welche in manchen Fällen vorteilhafte Eigenschaften aufweisen kann, sofern die geforderte Bruchdehnung gegeben ist.

Die erfindungsgemäße Verbundfolie ist vorzugsweise bei Raumtemperatur vakuumtiefziehfähig. Tiefziehfähig im Sinne des vorliegenden Textes bedeutet eine Bruchspannung bei 10% Dehnung von weniger als 50 MPa und eine Bruchdehnung von mindestens 200% (gemessen nach DIN EN ISO 527 bei 23 °C). Bevorzugt umfasst "Tiefziehen" im Sinne dieses Textes die Umformung mittels eines Streckformverfahrens, weiter bevorzugt unter Vakuumbedingungen.

Eine erfindungsgemäße Verbundfolie ist darüber hinaus vorzugsweise wickelbar. Wickelbar bedeutet in diesem Zusammenhang, dass die Verbundfolie auf eine Rolle mit einem Durchmesser von ≤ 30 cm, bevorzugt ≤ 20 cm und besonders bevorzugt ≤ 10 cm aufgewickelt werden und in diesem Zustand wenigstens 24 Stunden verbleiben kann, ohne dass eine wesentliche Einbuße der mechanischen Qualitäten der erfindungsgemäßen Verbundfolie (z.B. die Dehnbarkeit der Verbundfolie, insbesondere des darauf befindlichen Beschichtungsstoffes) und insbesondere ohne dass eine dauerhafte Verformung eintritt. Des Weiteren bedeutet es, dass die Verbundfolie sich anschließend wieder abwickeln lässt, ohne die erfindungsgemäßen Eigenschaften zu verlieren und bevorzugt ohne dass Beschichtungsstoff auf die Rückseite der Verbundfolie übertragen wird. Es kommt nicht zur sogenannten Verblockung.

Besonders bevorzugt ist eine erfindungsgemäße Verbundfolie, wobei der Gewichtsanteil von flüchtigen Bestandteilen wie Wasser oder organischen Lösemitteln, die bei einer Bestimmung mittels Thermogravimetrie (TGA) gemäß DIN ISO EN 11358-1 und DIN 51006 bei einer Heizrate von 2 K/min (Starttemperatur: 23°C) bis 120 °C in einer als Gewichtsabnahme resultieren (weitere Details zur Durchführung dieser Bestimmungsmethode sind in den Beispielen angegeben), im ausgehärteten Beschichtungsstoff unter 20 Gew.-%, bevorzugt unter 10 Gew.-%, besonders bevorzugt unter 6 Gew.-% liegt, bezogen auf die Gesamtmasse des Beschichtungsstoffes einer erfindungsgemäßen Verbundfolie,

Bevorzugt ist eine erfindungsgemäße Verbundfolie ohne ein Matrix-Harz zur Herstellung von Kunststoffen (z.B. ein aushärtbares Kunststoffmaterial) aufgewickelt.

Bevorzugt kann eine erfindungsgemäße Verbundfolie über 6% linear in Längs- und/oder Querrichtung gedehnt werden, bevorzugt über 10 %, besonders bevorzugt über 15 % ohne dass sich der Beschichtungsstoff von der siliziumorganischen Beschichtung ablöst. Nähere Angaben zur Bestimmung der Messwerte sind am Ende des Beschreibungstextes als Ergänzung zu den Beispielen angegeben. Des Weiteren stellt das Einbringen der erfindungsgemäßen Verbundfolie in eine Form häufig die Anforderung, dass es möglich ist, dass die erfindungsgemäße Verbundfolie für ein faltenfreies Bedecken einer zweidimensional nicht-ebenen Formoberfläche insbesondere in zwei senkrecht zueinander stehenden Richtungen, mindestens um 5% gedehnt werden kann, bevorzugt mindestens um 10%, weiter bevorzugt um 15%, sodass bei Dehnung der Verbundfolie keine Ablösung des Lackes bzw. des Beschichtungsstoffes auftritt. Bevorzugt verfügt die erfindungsgemäße Verbundfolie über die genannten Merkmale.

Bevorzugt ist eine erfindungsgemäße Verbundfolie umfassend einen ausgehärteten Beschichtungsstoff, welcher bei 23 °C eine Bruchdehnung zwischen 5% und 800% aufweist, besonders bevorzugt zwischen 8% und 300%, ganz besonders bevorzugt zwischen 18% und 150%, sowie als Untergrenze jeweils noch weiter bevorzugt 25%, 50%, 100%, 150%, 200%, und am meisten bevorzugt 250%.

Der einseitige Auftrag des Beschichtungsstoffes auf die bereits mit der siliziumorganischen Schicht versehenen Trägerfolie erfolgt bevorzugt mittels einer Beschichtungsanlage im Rolle zu Rolle Betrieb, so dass z.B. ein Glattwalzen- oder Rasterwalzenauftragswerk verwendet werden kann. Je nach Beschichtungserfordernis können auch Breitschlitzdüsen zum Einsatz kommen. Grundsätzlich ist es jedoch auch möglich zu Rakeln oder den Beschichtungsstoff aufzusprühen oder aufzudrucken. In aller Regel ist nach dem Auftrag des Beschichtungsstoffes eine Trocknung und/oder eine (Teil-)Aushärtung vorzunehmen. Diese kann z.B. thermisch oder mittels UV-Strahlung erfolgen. Bevorzugt wird der Beschichtungsstoff so trocken wie möglich verarbeitet, um den Trocknungsschritt zeitlich klein zu halten. Es ist darauf zu achten, dass der Beschichtungsstoff ausreichend ausgehärtet ist, bevor ein Wickel gebildet wird, um Anhaftungen an der Rückseite der Trägerfolie zu vermeiden.

Sollte die Trägerfolie mit der siliziumorganischen Schicht bei der Applikation nicht ausreichend durch den Beschichtungsstoff benetzt werden, wird der Fachmann beispielsweise die Schichtdicke des frisch aufgetragenen Beschichtungsstoffs erhöhen, die Viskosität des Beschichtungsstoffs bei der Applikation erhöhen und/oder die Oberflächenenergie sowie bevorzugt den polaren Anteil der Oberflächenenergie analog zu dem Vorgehen für den Fall, dass der ausgehärtete Beschichtungsstoff gerissen oder abgeplatzt ist, erhöhen.

Die siliziumorganische Schicht weist auf der Trägerfolie vor dem Auftragen des vorstehend definierten Beschichtungsstoffs (oder des vorstehend als bevorzugt definierten Beschichtungsstoffes) bevorzugt eine Oberflächenenergie (bestimmt nach der Auswertemethode gemäß Owens-Wendt-Rabel-Kaelble (siehe D. H. Kaelble, Dispersion-Polar Surface Tension Properties of Organic Solids. In: J. Adhesion 2 (1970), S. 66-81; D. Owens; R. Wendt, Estimation of the Surface Free Energy of Polymers. In: J. Appl. Polym. Sci 13 (1969), S. 1741-1747; W. Rabel, Einige Aspekte der Benetzungstheorie und ihre Anwendung auf die Untersuchung und Veränderung der Oberflächeneigenschaften von Polymeren. In: Farbe und Lack 77,10 (1971), S. 997-1005) von weniger als 35 mN/m, besonders bevorzugt von weniger als 30 mN/m, weiter bevorzugt von weniger als 28 mN/m auf.

Bevorzugt weist die siliziumorganische (Trenn)Schicht auf der Trägerfolie vor dem Auftragen des Beschichtungsstoffs einen polaren Anteil der Oberflächenenergie (berechnet nach Owens-Wendt-Rabel-Kaelble, siehe oben) von weniger als 9 mN/m, besonders bevorzugt von weniger als 7 mN/m, weiter bevorzugt von weniger als 5 mN/m auf. Zur Bestimmung der vorstehenden Werte siehe in den Beispielen "Messung der freien Oberflächenenergie bzw. der Oberflächenspannung".

Die Verbundadhäsionsfestigkeit kann durch Dehnungsversuche bestimmt werden. Dazu wird ein geeigneter Beschichtungsstoff auf eine siliziumorganische Schicht, angeordnet auf einer Trägerfolie, aufgetragen. Der geeignete Beschichtungsstoff wird sodann entsprechend ausgehärtet bis die Bruchdehnung für die erfindungsgemäße Verbundfolie vorliegt. Anschließend wird die Versuchsverbundfolie auf die geforderte Dehnbarkeit gedehnt und im Lichtmikroskop bewertet, ob der Beschichtungsstoff gerissen, abgelöst oder gar abgeplatzt ist. Man erkennt einen erfindungsgemäßen Verbund daran, dass sich der ausgehärtete Beschichtungsstoff während und nach dem Dehnungsexperiment die Trägerfolie sauber bedeckt und keine Fehlstellen aufweist. Zur Durchführung des Dehnungsexperimentes wird vorzugsweise ein Normzugprüfkörper in Anlehnung an die DIN 53 504 Stab S2 aus der Verbundfolie ausgestanzt und in eine Dehnungsapparatur eingebracht. Diese wird sodann unter einem Lichtmikroskop (vorzugsweise mit hohem Arbeitsabstand) gelegt, so dass es möglich ist, den Dehnungsvorgang zu beobachten. Eine Dehnungsgeschwindigkeit von etwa 1,5 cm/min ist bevorzugt.

Zur Einstellung der Verbundadhäsionsfestigkeit wird vorgeschlagen, zunächst mit einer siliziumorganischen Trennschicht mit einer Oberflächenenergie von ca. 21,0 ± 1,0 mN/m zu starten, wobei der polare Anteil der Oberflächenenergie bevorzugt < 1,5 mN/m ist.

Wenn der ausgehärtete Beschichtungsstoff gerissen oder abgeplatzt ist, kann die Verbundadhäsionsfestigkeit durch die Anpassung der siliziumorganischen Schicht verbessert werden. Hierzu wird der vorgenannte Versuch mit einer siliziumorganischen Schicht wiederholt, die eine um 1,5 ± 1 mN/m größere Oberflächenenergie aufweist. Dabei wird bevorzugt auch der polare Anteil auf Werte im Bereich von 0,5 bis 2,5 mN/m angehoben. Dabei ist dem Fachmann bekannt, dass die geeigneten Trennschichten in einem Plasmaprozess durch eine Variation der Gaszusammensetzung und der eingekoppelten Plasmaleistung herstellbar sind. Dieses Vorgehen, nämlich die sukzessive Erhöhung der Oberflächenenergie um etwa 1,5 mN/m und bevorzugt des polaren Anteils der Oberflächenenergie um etwa 1,5 mN/m, wird so lange weitergeführt, bis der vorstehend definierten Beschichtungsstoff (oder der vorstehend als bevorzugt definierten Beschichtungsstoff) bei der geforderten Dehnung nicht mehr reißt oder abplatzt. Die dabei vorhandene siliziumorganische Trennschicht ist erfindungsgemäß bevorzugt für eine erfindungsgemäße Verbundfolie.

Der Fachmann für die Abscheidung plasmapolymerer Beschichtungen wird eine Erhöhung der Oberflächenenergie entweder durch veränderte Verhältnisse des Arbeitsgases (z.B. Verringerung des Anteils an Hexamethyldisiloxan (HMDSO) gegenüber dem Anteil an Sauerstoff) vornehmen oder auch durch die Einkopplung höherer Plasmaleistung. Weitere Hinweise zu einer bevorzugten Abscheidung plasmapolymerer Beschichtungen werden im Beispiel gegeben.

In ganz besonders bevorzugten erfindungsgemäßen Verbundfolien wird die Oberflächenenergie der siliziumorganischen Schicht an die Hafteigenschaften und/oder die geforderte Dehnbarkeit des vorstehend definierten Beschichtungsstoffs (oder des vorstehend als bevorzugt definierten Beschichtungsstoffes) derart angepasst, dass für

a) einen weniger haftenden, vorstehend definierten Beschichtungsstoff (oder für einen weniger haftenden, vorstehend als bevorzugt definierten Beschichtungsstoff)
und/oder

b) eine höhere geforderte Dehnung
eine größere Oberflächenenergie und/oder ein größerer polarer Anteil der Oberflächenenergie gewählt wird.

Bevorzugt ist auch eine erfindungsgemäße Verbundfolie wie vorstehend definiert (oder wie vorstehend als bevorzugt definiert), wobei die siliziumorganische Schicht eine plasmapolymere Schicht ist.

Die siliziumorganische Schicht ist eine bevorzugt mittels Plasmaverfahrens hergestllte plasmapolymere Trennschicht bevorzugt dadurch gekennzeichnet, dass sie insbesondere über eine dehäsive Oberfläche (auf der dem Lack oder Beschichtungsstoff zugewandten Seite) und eine adhäsive Grenzfläche zur Trägerfolie verfügt. Dadurch kann der Lack bzw. Beschichtungsstoff auch beispielsweise auf gekrümmte Bauteile mit Hilfe der erfindungsgemäßen Verbundfolie appliziert werden. Dies wird dadurch erreicht, dass sowohl die Trägerfolie zusammen mit der siliziumorganischen Schicht, die vorzugsweise eine plasmapolymere Schicht ist, als auch der ausgehärtete Lack bzw. Beschichtungsstoff als Verbund dehnbar sind und sich so der Oberflächenkontur einer Form oder eines Kunststoffbauteils anpassen können.

Darüber hinaus weist die siliziumorganische Schicht eine sehr gute Haftung zur Trägerfolie auf. Dies kann bevorzugt durch einen Plasmaprozess sichergestellt werden, bei dem darauf geachtet wird, dass die Trägerfolie unmittelbar in die aktive Plasmazone eingebracht wird. Ebenfalls bevorzugt wird eine für die jeweilige Trägerfolie geeignete Vorbehandlung, z.B. mittels Corona- oder Plasmaaktivierung, auswählt.

Der Umstand, dass ein Beschichtungsstoff mit einer vorstehend definierten Bruchdehnung in einer erfindungsgemäßen Verbundfolie unter hohen Dehnungen, als Ganzes oder lokal vorliegen können, dennoch eine gleichmäßige und lückenlose Bedeckung und Adhäsion aufweist, unterscheidet die erfindungsgemäße Lösung vom Stand der Technik. Die erfindungsgemäße Lösung, insbesondere im Hinblick auf eine ausreichende Adhäsion auf der mit einer siliziumorganischen Schicht versehenen Trägerfolie, wird bevorzugt durch die Kombination einer plasmapolymeren Schicht mit einem vorstehend definierten Beschichtungsstoff (oder mit einem vorstehend als bevorzugt definierten Beschichtungsstoff) erreicht.

Eine "plasmapolymere Schicht" ist im Rahmen dieses Textes eine Schicht, welche mittels Plasmapolymerisation herstellbar ist. Plasmapolymerisation ist ein Verfahren, bei dem sich gasförmige Precursoren (oft auch Monomere genannt), angeregt durch ein Plasma, auf einem frei wählbaren Substrat als hochvernetzte Schicht niederschlagen. Voraussetzung für eine Plasmapolymerisation ist das Vorhandensein von kettenbildenden Atomen wie Kohlenstoff oder Silizium im Arbeitsgas. Durch die Anregung werden die Moleküle der gasförmigen Substanz (Precursoren), durch den Beschuss mit Elektronen und/oder energiereichen Ionen fragmentiert. Dabei entstehen hochangeregte radikalische oder ionische Molekülfragmente, die miteinander im Gasraum reagieren und auf der zu beschichtenden Oberfläche abgeschieden werden. Auf diese abgeschiedene Schicht wirkt innerhalb der aktiven Plasmazone die elektrische Entladung des Plasmas und dessen intensiver Ionen- und Elektronenbeschuss fortwährend ein, sodass in der abgeschiedenen Schicht weitere Reaktionen ausgelöst und eine hochgradige Verknüpfung der abgeschiedenen Moleküle erzielt werden kann.

Im Rahmen des vorliegenden Textes umfasst der Begriff "plasmapolymere Schicht" auch Schichten, die mittels plasmaunterstützter chemischer Gasphasenabscheidung(plasma-enhanced chemical vapour deposition, PE-CVD) hergestellt werden können. Hierbei wird zur Reaktionsführung das Substrat zusätzlich erwärmt. Ferner sei ausdrücklich erwähnt, dass auch Atmosphärendruckplasmaverfahren zur Herstellung erfindungsgemäß einzusetzender plasmapolymerer Schichten verwendet werden können, wenngleich Niederdruck-Plasmapolymerisationsverfahren derzeit bevorzugt sind.

Im Rahmen des vorliegenden Textes werden Substanzen, die zur Schichtbildung über eine Plasmapolymerisation als Gas bzw. Dampf einem Plasma zugeführt werden, als "Monomere" (gasförmige Precursoren) bezeichnet.

Im Übrigen sind plasmapolymere Schichten in ihrer chemischen und strukturellen Zusammensetzung eindeutig von polymeren Schichten zu unterscheiden. Während bei Polymeren der Verknüpfungsprozess der Monomere in vorhersagbarer Weise geschieht, werden bei der Plasmapolymerisation die eingesetzten Monomere durch Kontakt mit dem Plasma stark verändert (bis zur vollständigen Zerstörung) und in Form von reaktiven Spezies abgeschieden, so dass sich eine hochvernetzte Schicht ergibt, ohne regelmäßig repetitive Bereiche. Diese entstehende Schicht ist zusätzlich noch dem Plasma ausgesetzt, so dass sie durch Ablation und Redepositionseffekte weiter modifiziert wird. Die entstehende Schicht ist dreidimensional vernetzt und amorph. Dementsprechend unterscheidet sich die Plasmapolymerisation im Sinne dieses Textes von konventionellen Methoden der Polymerisation. Dies gilt auch für die sogenannte "strukturerhaltende Plasmapolymerisation", da selbst bei "milden" Plasmabedingungen unvorhersagbare Molekülbrüche auftreten. In diesem Zusammenhang sei beispielsweise auf folgende Literaturstelle verwiesen: "Plasma Polymerization" by H. Yasuda, Academic Press, Inc., (1985).

Die Verwendung einer plasmapolymeren Schicht in einer erfindungsgemäßen Verbundfolie ist vorteilhaft gegenüber anderen siliziumorganischen Schichten, welche mittels "klassischer Silikonisierung" hergestellt wurden, da bei der Verwendung der plasmapolymeren Schicht keine lackbenetzungsstörenden Stoffe an die Oberfläche des Kunststoffbauteils übertragen werden.

Insbesondere ist es vorteilhaft, dass durch das spezielle Herstellungsverfahren von plasmapolymeren Schichten durch eine starke Quervernetzung der aufgetragenen Stoffe eine hohe Kohäsionsfestigkeit entsteht und somit beim Ablösen der Trägerfolie und plasmapolymeren Schicht von dem Beschichtungsstoff eine deutlich geringere Anzahl an Rückständen verbleibt als bei klassischen silikon- oder fluorpolymerbasierten Trennschichten.

Bevorzugt ist auch eine erfindungsgemäße Verbundfolie wie vorstehend definiert (oder wie vorstehend als bevorzugt definiert), wobei der Beschichtungsstoff einen Stoff umfasst, ausgewählt aus der Gruppe bestehend aus Primer, Füller, Druckfarbe und Lack, bevorzugt Basislack, Decklack und/oder Klarlack.

Bevorzugt enthält der Beschichtungsstoff ein Bindemittel, welches ungesättigte Polyesterharze, Acrylsäureester, Epoxidharze, Alkydharze, Polyurethanharze, Phenolharze, gesättigte Polyester, Ölalkydharze, Polyamide, Cellulosederivate, Chlorkautschuklacke, Plastisole, Polyvinylchlorid oder Melaminharze enthält. Besonders bevorzugt enthält das Bindemittel Polyurethanharze.

Ebenfalls bevorzugt ist die Ausgestaltung mit mehreren Lagen von Beschichtungsstoffen, besonders bevorzugt von unterschiedlichen Beschichtungsstoffen. Zudem können bevorzugt als Beschichtungsstoff Druckfarben verwendet werden.

Besonders bevorzugt ist der Beschichtungsstoff einer erfindungsgemäßen Verbundfolie ein organisch-chemischer Beschichtungsstoff.

Die vorstehend genannten Stoffe stellen besonders bevorzugte Beschichtungsstoffe einer erfindungsgemäßen Verbundfolie dar, da sie in Verbindung mit einer siliziumorganischen Schicht, insbesondere mit einer plasmapolymeren Schicht, besonders vorteilhafte Eigenschaften aufweisen.

Insbesondere der Einsatz eines Lacks, besonders bevorzugt ein Basislack, Decklack und/oder Klarlack, ist vorteilhaft, da Lacke üblicherweise Moleküle umfassen, die einen besonders hohen Grad an Quervernetzung während des Härtungsprozesses eingehen, jedoch einen dazu geringeren Grad an chemischen Bindungen mit einer siliziumorganischen Schicht, insbesondere einer plasmapolymeren Schicht, eingehen. Auf diese Weise können besonders gleichmäßige und rissfreie Beschichtungen eines Beschichtungsstoffes hergestellt werden, welche sich besonders vorteilhaft von der siliziumorganischen Schicht auf einer Trägerfolie, insbesondere von einer plasmapolymeren Trennschicht auf einer Trägerfolie, entfernen lassen.

Der Beschichtungsstoff einer erfindungsgemäßen Verbundfolie umfasst ganz besonders bevorzugt eines der vorstehend genannten Bindemittel, da dies zu einer stärkeren Quervernetzung im Beschichtungsstoff, insbesondere in einem Lack, führt und somit die vorstehend beschriebenen vorteilhaften Eigenschaften weiter verstärkt.

Bevorzugt ist auch eine erfindungsgemäße Verbundfolie wie vorstehend definiert (oder wie vorstehend als bevorzugt definiert), wobei die siliziumorganische Schicht folgende Stoffmengenverhältnisse gemessen mittels XPS aufweist:

$$0{,}95 \leq n(O + N) : n(Si) \leq 2{,}10$$

$$1{,}50 \ \leq n(C) : n(Si) \qquad \leq \qquad 2{,}90$$

$$0{,}90 \ \leq n(C) : n(O + N) \quad \leq \qquad 2{,}50$$

Bevorzugt ist auch eine erfindungsgemäße Verbundfolie wie vorstehend definiert (oder wie vorstehend als bevorzugt definiert), wobei die siliziumorganische Schicht folgende Elementanteile umfasst, bezogen auf die Summe der Elemente Silizium, Sauerstoff, Stickstoff und Kohlenstoff als 100 Atom-%, gemessen mittels XPS auf der Oberfläche der siliziumorganischen Schicht:

| | |
|---|---|
| Silizium | 17 bis 25 Atom-% |
| (Sauerstoff + Stickstoff) | 20 bis 39 Atom-% |
| Kohlenstoff | 38 bis 62 Atom-% |

Bevorzugt besitzt die siliziumorganische Schicht wie vorstehend definiert (oder eine plasmapolymere Schicht wie vorstehend als bevorzugt definiert) eine Schichtdicke von weniger als 2 $\mu$m, besonders bevorzugt von weniger als 0,5 $\mu$m, ganz besonders bevorzugt von weniger als 0,2 $\mu$m.

Die erfindungsgemäß einzusetzende plasmapolymere Schicht wird auf der (später dem Beschichtungsstoff zugewandten) Oberfläche - wie bereits oben beschrieben - über das ESCA-Spektrum (ESCA = Electron Spectroscopy from Chemical Analysis, oft auch XPS-Untersuchung genannt, XPS = X-ray Photoelectron Spectroscopy) charakterisiert.

Zu einer erfindungsgemäß bevorzugten Methode zur Durchführung der ESCA-Untersuchung vergleiche auch entsprechende Messmethode weiter unten.

Bevorzugt ist auch eine erfindungsgemäße Verbundfolie wie vorstehend definiert (oder wie vorstehend als bevorzugt definiert), wobei die Trägerfolie nach

DIN EN ISO 527 bei einer Temperatur von 40 °C eine Spannung bei 50% Dehnung von maximal 80 MPa aufweist und bei einer Temperatur von 80 °C eine Spannung bei 50% Dehnung von maximal 40 MPa aufweist. Diese Trägerfolieneigenschaften bleiben bevorzugt auch nach dem Trennschichtauftrag erhalten.

Bevorzugt weist die Trägerfolie bei einer Temperatur von 40 °C eine Spannung bei 50%-Dehnung nach DIN EN ISO 527 von 0,5 bis 60 MPa auf, besonders bevorzugt von 8 bis 35 MPa.

Bevorzugt ist die Trägerfolie bei einer Temperatur zwischen 80 °C und 440 °C fließfähig, besonders bevorzugt bei einer Temperatur zwischen 110 °C und 270 °C.

Bevorzugt weist die Trägerfolie bei einer Temperatur von 23 °C eine Bruchspannung nach DIN EN ISO 527 von 12 bis 180 MPa auf, besonders bevorzugt von 40 bis 130 MPa.

Bevorzugt weist die Trägerfolie bei einer Temperatur von 23 °C eine Bruchdehnung nach DIN EN ISO 527 von 5% bis 1500% auf, besonders bevorzugt 5% und 800%, ganz besonders bevorzugt zwischen 18% und 150%.

Bevorzugt ist die Trägerfolie 15 bis 80 $\mu$m dick.

Weiter bevorzugt umfasst die Trägerfolie ein Blockkopolymer, welches sowohl elastische als auch (teil-)kristalline Bereiche ausbildet. Besonders bevorzugt haben die (teil-)kristallinen Bereiche eine laterale Ausdehnung zwischen 3 $\mu$m und 300 $\mu$m, weiter bevorzugt zwischen 10 $\mu$m und 100 $\mu$m.

Eine vorstehend beschriebene erfindungsgemäße Verbundfolie ist vorteilhaft, da bei dem Einsatz einer Trägerfolie mit den nach DIN EN ISO 527 bestimmten, vorstehend beschriebenen Eigenschaften eine besonders vorteilhafte Dehnbarkeit der erfindungsgemäßen Verbundfolie eingestellt wird, sodass sich die erfindungsgemäße Verbundfolie auch an ganz besonders komplexe dreidimensionale Formgeometrien anpassen kann, ohne dass eine zusätzliche Erwärmung oder ein ähnlicher Vorgang angewandt werden muss.

Bevorzugt ist auch eine erfindungsgemäße Verbundfolie wie vorstehend definiert (oder wie vorstehend als bevorzugt definiert), wobei die Trägerfolie

- eine Dicke von 10 $\mu$m bis 200 $\mu$m besitzt
  und/oder

- mehrlagig aufgebaut ist.

Die Verwendung einer Trägerfolie mit einer Dicke von 10 $\mu$m bis 200 $\mu$m hat den Vorteil, dass solche Trägerfolien besonders einfach mit einer plasmapolymeren Schicht und anschließend mit einer Beschichtung eines Beschichtungsstoffes im Rolle zu Rolle Prozess beschichtet werden können.

Mehrlagige Trägerfolien haben den Vorteil, dass die der siliziumorganischen Schicht zugewandte Seite der Trägerfolie an die gewünschten Voraussetzungen in Verbindung mit der siliziumorganischen Schicht, insbesondere mit einer plasmapolymeren Schicht, angepasst werden können. Zudem kann bei der Verwendung einer mehrlagigen Träger-folie die der siliziumorganischen Schicht abgewandte Seite der Trägerfolie so angepasst werden, dass bei dem Aufwickeln der erfindungsgemäßen Verbundfolie keine unvorteilhafte Haftfestigkeit zwischen der der siliziumorganischen Schicht abgewandten Seite der Trägerfolie und dem Besichtigungsstoff des darunterliegenden Abschnitts der erfindungsgemäßen Verbundfolie resultiert.

Bevorzugt besteht die Trägerfolie aus Polyamid oder Polyester, beispielsweise aus Polyethylenterephthalat (PET) oder Polybutylenterephthalat (PBT) oder aus Multilagenfolien (Verbundfolien), weiter bevorzugt aus einem thermoplastischen Elastomer (TPE), besonders bevorzugt aus thermoplastischen Polyesterelastomeren (TPE-E); thermoplastischen Copolyestern (TPC); vernetzten thermoplastischen Elastomeren auf Olefinbasis (TPE-V / TPV), wie Mischungen aus Polypropylen und Ethylen-Propylen-Dien-Kautschuk (EPDM/PP), Mischungen aus Naturkautschuk und Polypropylen (NR/PP) oder Mischungen aus Nitrilkautschuk und Polypropylen (NBR/PP); thermoplastischen Elastomeren auf Urethanbasis (TPE-U / TPU); thermoplastischen Copolyamiden (TPE-A / TPA), wie beispielsweise PEBA und/oder Mischungen aus Ethylenvinylacetat und Polyvinylidenchlorid (EVA/PVDC).

Erfindungsgemäß bevorzugt ist eine erfindungsgemäße Verbundfolie, wobei die Träger-folie ein Blockpolymer umfasst oder daraus besteht.

Diese Art von Trägerfolien sind besonders geeignet, die erfindungsgemäßen Dehnungsverhältnisse und Haftverhältnisse zu gewährleisten. Bevorzugt ist dabei, dass das Blockpolymer ausgewählt aus der Gruppe bestehend aus Copolyestern, Copolyamiden, Polyolefin-Copolymeren und Polyesterurethan-Copolymeren, besonders bevorzugt aus der der Gruppe bestehend aus Copolyestern und Polyesterurethan-Copolymeren, weiter bevorzugt aus Copolyestern.

Bevorzugt ist ein erfindungsgemäßer Verbund, wobei der Kunststoff der Trägerfolie kristalline und amorphe Mikrophasen umfasst, wobei die amorphen Mikrophasen weiter bevorzugt elastomeren Charakter aufweisen. Bevorzugt sind die einen Mikrophasen dabei partikelartig mit einer Ausdehnung zwischen 2 $\mu$m und 1000 $\mu$m in der Polymermatrix der anderen Mikrophase eingebettet, besonders bevorzugt mit einer Ausdehnung zwischen 7 $\mu$m und 250 $\mu$m, weiter bevorzugt zwischen 15 $\mu$m und 100 $\mu$m. Bevorzugt sind dabei die harten kristallinen Mikrophasen partikelartig in der Polymermatrix der weichen amorphen Mikrophasen eingebettet. Sichtbar gemacht werden können die Unterschiede zwischen den Mikrophasen beispielsweise durch licht- oder röntgenelektronenmikroskopische Aufnahmen von mehr als 30% gedehnten Proben anhand unterschiedlicher oberflächlicher Mikrorisse.

Der Wechsel von amorphen und kristallinen Mikrophasen führen zu einer gleichmäßigeren Dehnung der erfindungsgemäßen einzusetzenden Trägerfolie, sodass weniger Scherkräfte zu den angrenzenden Schichten entstehen, was wiederrum das Haftungsverhalten verbessert.

Bevorzugt ist eine erfindungsgemäße Verbundfolie, bei der der Beschichtungsstoff beim Aufheizen von 23 °C auf 120 °C mit einer Heizrate von 2 K/min eine Gewichtsabnahme von weniger als 15 % aufweist, besonders bevorzugt von weniger als 10 %, weiter bevorzugt von weniger als 5 %. Dabei wird der Heizprozess bei 120°C abgebrochen.

Überraschenderweise hat sich herausgestellt, dass Beschichtungsstoffe, insbesondere Lacke, die unter den genannten Bedingungen über eine verhältnismäßige geringe Gewichtsabnahme verfügten, die entsprechenden Haftungsbedingungen hervorragend erfüllen, sowie über eine ausreichende Kohäsionsfestigkeit verfügen, so dass sie nach dem Aufrollen nur auf der Seite der Trägerfolie haften, auf die sie zuvor aufgebracht wurden, und nicht auf der Rückseite dieser Trägerfolie.

Erfindungsgemäß wird bevorzugt, ist es, dass der erfindungsgemäße einzusetzende Beschichtungsstoff keine Fotorezeptoren umfasst und/oder thermisch ausgehärtet wird, wobei besonders bevorzugt ausschließlich thermisch ausgehärtet wird. Entsprechend bevorzugte Beschichtungsstoffe sind besonders einfach aushärtbar.

Erfindungsgemäß besonders bevorzugt handelt es sich bei dem Beschichtungsstoff um ein Polyurethan-System, weiter bevorzugt enthält der Beschichtungsstoff aliphatische Isocyanat-Komponenten.

Weiter bevorzugt wird als Beschichtungsstoff ein 2 K- Beschichtungssystem verwendet, bei dem beide Komponenten unmittelbar vor dem Auftrag auf die Trägerfolie vermischt werden. Diese bevorzugten Beschichtungsstoffe sind besonders gut handhabbar und eignen sich in besonderer Weise für die erfindungsgemäßen Verbundfolien.

Für viele Anwendungen ist es erfindungsgemäß bevorzugt, dass die Trägerfolie (teil-)transparent im Wellenlängenbereich des sichtbaren Lichtes ist. Hierdurch ist es möglich, nach der Fertigstellung des Bauteils und vor dem Entfernen der Trägerfolie eine optische Inspektion mit der beschichteten Oberfläche durchzuführen. So ist es möglich, trotz vorhandener Schutzschicht in Form der Trägerfolie eine Kontrolle der Übertragungsqualität für den Beschichtungsstoff durchzuführen.

Die Erfindung betrifft auch die Verwendung einer Verbundfolie wie vorstehend definiert (oder wie vorstehend als bevorzugt definiert) zur Übertragung eines Beschichtungsstoffes auf ein Kunststoffbauteil, wobei die Verbundfolie in einer Form tiefgezogen wird.

Im Rahmen der vorliegenden Erfindung ist ein Kunststoffbauteil vorzugsweise ein faserverstärktes Kunststoff-Bauteil oder Hybridbauteil oder ein Schaumbauteil oder ein Elastomerbauteil.

Bevorzugt handelt es sich bei diesem Kunststoffbauteil dabei um Epoxy- (EP), ungesättigte Polyester (UP), Polyurethan- (PUR), Vinylesterharz (VE) oder Phenol-Formaldehydharz (PF). Besonders bevorzugt handelt es sich bei dem Kunststoffbauteil um einen Faserverbundkunststoff (FVK) oder ein Hybridbauteil wie beispielsweise ein Faser-Metall-Laminat (FML) oder einen Schaum.

Die vorstehenden Ausführungen zur erfindungsgemäßen Verbundfolie gelten entsprechend für die erfindungsgemäße Verwendung. Dies gilt insbesondere für bevorzugte siliziumorganische Schichten, bevorzugte Trägerfolien und bevorzugte Ausgestaltungen des Beschichtungsstoffes.

Die Erfindung betrifft auch ein Verfahren zur Herstellung einer Verbundfolie wie vorstehend definiert (oder wie vorstehend als bevorzugt definiert), umfassend die Schritte:

a) Bereitstellen oder Herstellen einer Trägerfolie aus Kunststoff, bevorzugt wie vorstehend definiert, insbesondere wie vorstehend als bevorzugt definiert,

b) Aufbringen einer siliziumorganischen Schicht auf die Trägerfolie, bevorzugt wie vorstehend definiert, insbesondere wie vorstehend als bevorzugt definiert,

c) Aufbringen eines Beschichtungsstoffes, bevorzugt wie vorstehend definiert, insbesondere wie vorstehend als bevorzugt definiert, auf die siliziumorganische Schicht und

d) Aushärten des Beschichtungsstoffes, so dass dieser bei 23 °C eine Bruchdehnung zwischen 5% und 800% aufweist, bevorzugt zwischen 8% und 300%, besonders bevorzugt zwischen 18% und 150%,

wobei die siliziumorganische Schicht zwischen der Trägerfolie und dem Beschichtungsstoff angeordnet ist und wobei die Haftfestigkeit zwischen der siliziumorganischen Schicht und dem Beschichtungsstoff nach Aushärtung des Beschichtungsstoffes kleiner ist, als die Haftfestigkeit zwischen der siliziumorganischen Schicht und der Trägerfolie.

Die vorstehenden Ausführungen zur erfindungsgemäßen Verbundfolie und zur erfindungsgemäßen Verwendung gelten entsprechend für das erfindungsgemäße Verfahren zur Herstellung einer Verbundfolie. Dies gilt insbesondere für bevorzugte siliziumorganische Beschichtungen, bevorzugte Trägerfolien und bevorzugte Ausgestaltungen des Beschichtungsstoffes.

Bevorzugt erfolgt die Herstellung der Verbundfolie in Rolle-zu-Rolle-Verfahren, bevorzugt bei einer Bahngeschwindigkeit der Trägerfolie zwischen 1 und 200 m/min (weiter bevorzugt zwischen 3 und 80 m/min).

Besonders bevorzugt erfolgt das Aufbringen eines Beschichtungsstoffes auf die siliziumorganische Schicht des Beschichtungsstoffs (Schritt c) als Flüssigkeit, wobei der Beschichtungsstoff vor dem Aufrollen im Rolle zu Rolle Prozess zumindest teilweise gehärtet wird. Ganz besonders bevorzugt haftet der Beschichtungsstoff nach dem Aufrollen stärker auf Seite der Trägerfolie, auf die er zuvor aufgebracht wurde, als auf der Rückseite dieser Trägerfolie.

Besonders bevorzugt erfolgt das Aushärten des Beschichtungsstoffes mit Unterstützung von IR-Strahlung, UV-Strahlung oder Heißluft.

Bevorzugt beträgt das Aushärten des Beschichtungsstoffes zwischen 0,5 Sekunden und 15 Minuten, besonders bevorzugt zwischen 0,5 Sekunden und 3 Minuten.

Bevorzugt erfolgt das Aufbringen eines Beschichtungsstoffes auf die siliziumorganische Schicht des Beschichtungsstoffs (Schritt c)) über eine Transferwalze, Breitschlitzdüsen oder mithilfe eines Druckverfahrens.

Bevorzugt enthält der organische Beschichtungsstoff während des Aufbringens eines Beschichtungsstoffes auf die siliziumorganische Schicht des Beschichtungsstoffs (Schritt c) weniger als 90% flüchtige Bestandteile wie Wasser oder organische Lösemittel, besonders bevorzugt weniger als 70%, weiter besonders bevorzugt weniger als 50%, wobei sich die Angaben auf den Zeitpunkt des Kontaktes mit der siliziumorganischen Schicht beziehen.

Die Erfindung betrifft auch ein Verfahren zur Herstellung eines beschichteten Kunststoffbauteiles, umfassend die Schritte:

a) Bereitstellen oder Herstellen einer Verbundfolie wie vorstehend definiert (oder wie vorstehend als bevorzugt definiert),

b) Bereitstellen einer Form für das Kunststoffbauteil,

c) Anpassen, insbesondere durch Vakuumtiefziehen, bzw. Andrücken der Verbundfolie durch die eine eingespritzte Kunststoffmasse, der Verbundfolie in die Form, so dass der Beschichtungsstoff von der Form weg zeigt und

d) Aufbringen eines aushärtbaren Kunststoffmaterials oder einer thermoplastischen Kunststoffmasse für das Kunststoffbauteil auf die Verbundfolie.

Die vorstehenden Ausführungen zur erfindungsgemäßen Verbundfolie, zur erfindungsgemäßen Verwendung und zum erfindungsgemäßen Verfahren zur Herstellung einer Verbundfolie gelten entsprechend für das erfindungsgemäße Verfahren zur Herstellung eines beschichteten Kunststoffbauteiles. Dies gilt insbesondere für bevorzugte siliziumorganische Schichten, bevorzugte Trägerfolien und bevorzugte Ausgestaltungen des Beschichtungsstoffes.

Im Rahmen der vorliegenden Erfindung bedeutet "Anpassen der Verbundfolie in die Form", dass die die Verbundfolie in die Form mittels Anlegens eines Vakuums (d.h. mittels Vakuum-Tiefziehen) oder Anlegen eines äußeren Drucks, sodass die Verbundfolie passgenau auf die Form gedrückt wird.

Bevorzugt umfasst ein erfindungsgemäßes Verfahren dabei zusätzlich die folgenden Schritte:

- Aufbringen der dem Beschichtungsstoff abgewandten Seite der Verbundfolie auf eine (vorzugsweise zweidimensional nicht-ebene) Formoberfläche und/oder,

- Formen des aushärtbaren Kunststoffmaterials in der Form für das Kunststoffbauteil, sodass das aushärtbare Kunststoffmaterial die Form des resultierenden Kunststoffbauteils annimmt.

Besonders bevorzugt umfasst ein erfindungsgemäßes Verfahren dabei zusätzlich die folgenden Schritte:

- Härten oder Erstarren des geformten Kunststoffmaterials, sodass ein Kunststoff-bauteil resultiert.

Ganz besonders bevorzugt umfasst ein erfindungsgemäßes Verfahren dabei zusätzlich die folgenden Schritte:

- Entnehmen des Kunststoffbauteils umfassend die Verbundfolie aus der Form,

- Abziehen der Trägerfolie mit der siliziumorganischen Beschichtung von dem auf dem Kunststoffbauteil verbleibenden Beschichtungsstoff, sodass der Beschichtungsstoff vorzugsweise gleichmäßig und lückenlos von der Trägerfolie auf das (vorzugsweise zweidimensional nicht-ebene) Kunststoffbauteil übertragen wird.

Im Rahmen der vorliegenden Erfindung ist ein Kunststoffbauteil vorzugsweise ein faserverstärktes Kunststoff-Bauteil oder Hybridbauteil oder Schaumbauteil oder Elastomerbauteil.

Besonders bevorzugt wird das Kunststoffbauteil dabei in der Form durch die Aushärtung von Reaktivharzen als Beispiel für aushärtbare Kunststoffmaterialen gefertigt. Besonders bevorzugt handelt es sich bei diesen Reaktivharzen um Epoxy- (EP), ungesättigte Polyester (UP), Polyurethan- (PUR), Vinylesterharz (VE) oder Phenol-Formaldehydharz (PF). Besonders bevorzugt handelt es sich bei dem Kunststoffbauteil um einen Faserverbundkunststoff (FVK) oder ein Hybridbauteil wie beispielsweise ein Faser-Metall-Laminat (FML).

In einer besonderen Ausgestaltung wird als Trägerfolie eine oberflächenstrukturierte Trägerfolie verwendet, um so ein Kunststoff- oder Hybridwerkstoff-Bauteil, zu fertigen, welches eine strukturierte Lack- bzw. Beschichtungsstoffoberfläche aufweist.

Bevorzugt wird die Verbundfolie vor dem Eintrag des aushärtbaren Kunststoffmaterials auf die Formoberfläche aufgelegt oder tiefgezogen, besonders bevorzugt bei Raumtemperatur lediglich durch Evakuieren tiefgezogen. Weiter bevorzugt wird die Verbundfolie durch Spritzguss, Hinterspritzen oder Injektion des aushärtbaren Kunststoffmaterials auf die Formoberfläche gepresst oder in einem Pressverfahren konsolidiert.

Bevorzugt ergibt sich aus den geometrischen Abmessungen der zweidimensional nicht-ebenen Formoberfläche, dass die Verbundfolie für ein faltenfreies Bedecken der Formoberfläche in eine Richtung mindestens um 5% gedehnt werden muss, bevorzugt mindestens um 10%, weiter bevorzugt um 15%. Besonders bevorzugt ergibt sich aus den geometrischen Abmessungen der zweidimensional nicht-ebenen Formoberfläche, dass die Verbundfolie für ein faltenfreies bedecken der Formoberfläche in zwei senkrecht zueinanderstehenden Richtungen mindestens um 5% gedehnt werden muss, bevorzugt mindestens um 10%, weiter bevorzugt um 15%, sodass bei Dehnung der Verbundfolie keine Ablösung des Lackes bzw. des Beschichtungsstoffes auftritt.

Beispiele:

Beispiel 1: Herstellung der Trägerfolie mit siliziumorganischer Schicht

Eine 2100 mm breite thermoplastische Elastomerfolie auf Basis von Polybutylenterephthalat mit einer Spannung bei 50 % Dehnung von ca. 15 MPa und einer Bruchdehnung von ca. 500 % (gemessen nach DIN EN ISO 527 bei 23 °C) mit einer Dicke von 40 $\mu$m (als Beispiel einer Trägerfolie einer erfindungsgemäßen Verbundfolie) wird in einem 3 m$^3$ Plasma-Reaktor, wie er in Literaturstelle: "Optimierung und Bewertung plasmapolymerer Barriereschichten durch einen alternierenden Aufbau im Rolle-zu-Rolle PE-CVD-Verfahren" von Stefanie Wald, Cuvillier Verlag (2015) unter "2.3. Verwendete Niederdruckplasmaanlage" näher beschrieben ist, nahezu einseitig mit einer plasmapolymeren Schicht (als Beispiel einer siliziumorganische Schicht einer erfindungsgemäßen Verbundfolie) versehen. Dabei wird die Folie mit einem Abstand von ca. 40 mm vor zwei gekühlten, seitlich angebrachten Flächenelektroden (welche sich auf gleichem HF-Potential befinden) mit einer Fläche von jeweils 500 mm (entlang der Bahnrichtung) x 2300 mm geführt. Während der Beschichtung zum Auftragen einer plasmapolymeren Schicht wurden die nachfolgenden Plasma-Prozessparameter eingestellt:

Tabelle 1: Plasma-Prozessparameter

| Beschichtungsprozess-Nr. | 1 | 2 | 3 |
|---|---|---|---|
| Gasfluss $O_2$ (Sccm): | 50 | 150 | 200 |
| Gasfluss HMDSO (Sccm): | 250 | 150 | 100 |
| eingekoppelte Leistung (W): | 3200 | 3200 | 3200 |
| Bahngeschwindigkeit (m/min) | 7,0 | 6,0 | 4,7 |
| Druck (mbar): | ca. 0,02 | ca. 0,02 | ca. 0,02 |

Vor der Durchführung wird sichergestellt, dass die Leckrate (äußere Lecks) der benutzten Vakuumkammer deutlich kleiner als $2 \times 10^{-1}$ mbar L / s ist. Die elektrische Leistung wird mit einer Frequenz von 13,56 MHz eingekoppelt. Weitere Details zum Verfahren der Plasmabeschichtung können ebenfalls aus der o.g. Literaturstelle (Stefanie Wald) entnommen werden. Die Dicke der abgeschiedenen plasmapolymeren Beschichtung wird durch Referenzmessungen auf Silicium-Wafer-Stücken, die vor dem Plasmaprozess auf die Trägerfolie geklebt werden, mittels Reflektometrie ermittelt. Dabei ergibt sich eine Schichtdicke von ca. 30 nm.

**Beispiel 1a: Charakterisierung der Trägerfolie mit siliziumorganischer Schicht**

**Messung der freien Oberflächenenergie bzw. der Oberflächenspannung**

Für die Messungen wurde ein "MobilDrop GH11" der Firma Krüss GmbH, Hamburg, verwendet. Hierbei handelt es sich um ein Kontaktwinkel-Messgerät mit händisch zu bedienbarer Dosiereinheit. Der Prüftropfen wird mittels einer manuellen Dosiereinheit vorsichtig auf der Probenoberfläche abgelegt und weist ein Volumen von ca. 4 - 6 $\mu$l auf. Nach dem Aufbringen des Tropfens wird die Spritze entfernt und eine manuelle Basislinienausrichtung vorgenommen, so dass der Kontaktwinkel zeitnah, statisch nach dem Verfahren des ruhenden Tropfens (sessile drop) im Dreiphasen-Kontaktwinkel bestimmt werden kann. Zur Konturanalyse wird die "circle"-Methode verwendet. Diese Messung nimmt das Gerät 10 mal vor und bildet einen Mittelwert des Tropfenrandwinkels.
Um die Oberflächeneigenschaften der Folie besser beschreiben zu können, werden zudem an zehn örtlich unterschiedlichen Positionen derselben Probe Messungen mit der ersten Prüfflüssigkeit vorgenommen. Hieraus wird der Mittelwert gebildet. Danach wird die Prüfflüssigkeit gewechselt und der Vorgang an weiteren zehn Positionen der Probenoberfläche wiederholt.
Diese Vorgehensweise ist wichtig, da bei der Kontaktwinkelmessung unter anderem der Oberflächenrauigkeit eine große Bedeutung zukommt. Beispielsweise wird der Kontaktwinkel mit Wasser auf einer rauen Oberfläche gegenüber einer glatten Oberfläche vergrößert sein, wenn die Oberflächenchemie einen Wasserrandwinkel von >90° auf der glatten Oberfläche ermöglicht. In der Konsequenz wird dadurch die aus den Randwinkeln ermittelte Oberflächenenergie zu niedrig angegeben.
Als Prüfflüssigkeiten werden Wasser (Oberflächenspannung: 72,80 mN/m ; disperser Anteil: 21,80 mN/m ; polarer Anteil: 51,00 mN/m) und Dijodmethan [DJM] (Oberflächenspannung: 50,80 mN/m ; disperser Anteil: 50,80 mN/m ; polarer Anteil: 0,00 mN/m) verwendet. Der Fachmann wird im Zweifel die Oberflächenenergie der Prüfflüssigkeiten z.B. mit der Wilhelmy-Waage überprüfen und auch immer auf frische und reine Prüfflüssigkeiten achten.
Aus den Einzelmessungen je Prüfflüssigkeit wird der Mittelwert gebildet und diese Mittelwerte der Kontaktwinkel über die Gleichung von Owens-Wendt-Rabel-Kaelble

$$\sigma_{sl} = \sigma_s + \sigma_l - 2\left(\sqrt{\sigma_s^D \cdot \sigma_l^D} + \sqrt{\sigma_s^P \cdot \sigma_l^P}\right)$$

hinsichtlich der freien Oberflächenenergie (OFE) des Festkörpers ausgewertet. Durch diese statistische Auswertung gibt die Standardabweichung die Homogenität der Probe wieder.

Die drei Trägerfolien mit siliziumorganischer Schicht aus Beispiel 1 wurden wie folgt vermessen und ausgewertet:

| Beschichtungsprozess-Nr. 1 | Randwinkel Wasser | Abweichung | Randwinkel DJM | Abweichung |
|---|---|---|---|---|
| 10 statische Messungen an unterschiedlichen Positionen einer Probe | 99,60 | 0,14 | 60,60 | 0,00 |
| | 99,90 | 0,14 | 59,90 | 0,00 |
| | 101,50 | 0,12 | 60,00 | 0,02 |
| | 99,90 | 0,11 | 59,50 | 0,02 |
| | 98,90 | 0,14 | 59,50 | 0,05 |
| | 99,90 | 0,11 | 61,00 | 0,02 |
| | 99,40 | 0,10 | 59,80 | 0,08 |
| | 100,20 | 0,19 | 59,20 | 0,05 |
| | 98,90 | 0,12 | 58,10 | 0,01 |
| | 99,10 | 0,07 | 59,80 | 0,16 |
| **Mittelwert** | **99,7** | | **59,7** | |
| Standardabweichung | 0,73 | | 0,74 | |
| | OFE | dispers | polar | |
| | 29,3 | 28,7 | 0,5 | |
| | alle in mN/m | | | |

| Beschichtungsprozess-Nr. 2 | Randwinkel Wasser | Abweichung | Randwinkel DJM | Abweichung |
|---|---|---|---|---|
| 10 statische Messungen an unterschiedlichen Positionen einer Probe | 97,90 | 0,13 | 61,50 | 0,04 |
| | 97,90 | 0,06 | 56,80 | 0,04 |
| | 93,40 | 0,04 | 58,20 | 0,04 |
| | 98,70 | 0,06 | 55,00 | 0,24 |
| | 96,00 | 0,04 | 58,10 | 0,22 |
| | 98,50 | 0,04 | 58,30 | 0,02 |
| | 96,60 | 0,03 | 59,10 | 0,04 |
| | 96,70 | 0,04 | 57,10 | 0,11 |
| | 97,90 | 0,05 | 59,20 | 0,04 |
| | 97,40 | 0,04 | 59,00 | 0,01 |
| **Mittelwert** | **97,1** | | **58,2** | |
| Standardabweichung | 1,48 | | 1,64 | |
| | OFE | dispers | polar | |
| | 30,4 | 29,6 | 0,8 | |
| | alle in mN/m | | | |

| Beschichtungsprozess-Nr. 3 | Randwinkel Wasser | Abweichung | Randwinkel DJM | Abweichung |
|---|---|---|---|---|
| 10 statische Messungen an unterschiedlichen Positionen einer Probe | 80,00 | 0,04 | 54,20 | 0,15 |
| | 80,20 | 0,09 | 56,70 | 0,68 |
| | 81,50 | 0,00 | 53,80 | 0,11 |
| | 78,90 | 0,02 | 49,90 | 0,16 |
| | 80,70 | 0,01 | 49,90 | 0,16 |
| | 83,20 | 0,03 | 52,00 | 0,18 |
| | 79,60 | 0,01 | 54,20 | 0,19 |
| | 80,10 | 0,07 | 52,70 | 0,18 |
| | 80,40 | 0,01 | 51,30 | 0,16 |
| | 79,10 | 0,03 | 53,00 | 0,13 |
| **Mittelwert** | **80,4** | | **52,8** | |

(fortgesetzt)

| Beschichtungsprozess-Nr. 3 | Randwinkel Wasser | Abweichung | Randwinkel DJM | Abweichung |
|---|---|---|---|---|
| Standardabweichung | 1,18 | | 2,00 | |
| | OFE | dispers | polar | |
| | 37,6 | 32,7 | 4,9 | |
| | alle in mN/m | | | |

Eine unbeschichtete Folie stellt sich wie folgt dar:

| Unbeschichtete Trägerfolie aus Beispiel 1 | Wasser | Abweichung | DJM | Abweichung |
|---|---|---|---|---|
| | 74,10 | 0,11 | 44,20 | 0,14 |
| | 75,10 | 0,07 | 43,10 | 0,10 |
| | 75,20 | 0,08 | 43,80 | 0,11 |
| 10 statische Messungen an unterschiedlichen Positionen einer Probe | 75,10 | 0,09 | 44,40 | 0,13 |
| | 72,70 | 0,07 | 45,10 | 0,14 |
| | 74,60 | 0,09 | 43,00 | 0,14 |
| | 75,00 | 0,13 | 44,50 | 0,16 |
| | 74,30 | 0,08 | 43,90 | 0,13 |
| | 72,90 | 0,11 | 43,30 | 0,10 |
| | 73,30 | 0,08 | 44,60 | 0,16 |
| **Mittelwert** | **74,2** | | **44,0** | |
| Standardabweichung | 0,90 | | 0,66 | |
| | OFE | dispers | polar | |
| | 43,7 | 37,5 | 6,1 | |
| | alle in mN/m | | | |

$$\sigma_{sl} = \sigma_s + \sigma_l - 2\left(\sqrt{\sigma_s^D \cdot \sigma_l^D} + \sqrt{\sigma_s^P \cdot \sigma_l^P}\right)$$

Literatur und weitere Hinweise:
[1] https://www.kruss.de/de/service/schulung-theorie/glossar/
D. H. Kaelble, Dispersion-Polar Surface Tension Properties of Organic Solids. In: J. Adhesion 2 (1970), S. 66-81.
D. Owens; R. Wendt, Estimation of the Surface Free Energy of Polymers. In: J. Appl. Polym. Sci 13 (1969), S. 1741-1747.
W. Rabel, Einige Aspekte der Benetzungstheorie und ihre Anwendung auf die Untersuchung und Veränderung der Oberflächeneigenschaften von Polymeren. In: Farbe und Lack 77,10 (1971), S. 997-1005.

**Bestimmung der chemischen Zusammensetzung mit XPS**

Es wurden von den erfindungsgemäß zu verwendenden plasmapolymeren Schichten, welche gemäß Beispiel 1 bzw. Beispiel 2 hergestellt wurden, sowie von einem Referenzmaterial aufgenommen und ausgewertet.
Die ESCA-Untersuchungen wurden mit dem Spektrometer KRATOS AXIS Ultra der Fa. Kratos Analytical durchgeführt. Die Analysekammer war mit einer Röntgenquelle für monochromatisierte Al $K_\alpha$- Strahlung, einer Elektronenquelle als Neutralisator und einem Quadrupolmassenspektrometer ausgerüstet. Weiterhin verfügte die Anlage über eine magnetische Linse, welche die Photoelektronen über einen Eintrittsschlitz in einen Halbkugelanalysator fokussierte. Durch Kalibrierung wurde der aliphatische Anteil des C 1s Peaks auf 285,0 eV gesetzt. Während der Messung zeigte die Oberflächennormale auf den Eintrittsschlitz des Halbkugelanalysators.
Die Passenergie betrug bei der Bestimmung der Stoffmengenverhältnisse jeweils 160 eV, die entsprechenden Spektren werden als Übersichtsspektren bezeichnet. Bei der Bestimmung der Peak-Parameter betrug die Passenergie jeweils 20 eV.
Die genannten Messbedingungen sind bevorzugt, um eine weitgehende Unabhängigkeit vom Spektrometertyp zu ermöglichen und um für erfindungsgemäße Verbundfolien umfassend plasmapolymere Schichten zu identifizieren.
Als Referenzmaterial wurde das Polydimethylsiloxan Silikonöl DMS-T23E der Firma Gelest Inc. (Morrisville, USA) verwendet. Dieses trimethylsiloxy-terminierte Silikonöl besitzt eine kinematische Viskosität von 350 mm$^2$/s ($\pm$10%)

und eine Dichte von 0,970 g/mL bei 25 °C sowie ein mittleres Molekulargewicht von ca. 13 650 g/mol. Das ausgewählte Material zeichnet sich durch einen extrem geringen Anteil an verdampfbaren Bestandteilen aus: nach 24 Stunden bei 125 °C und $10^{-5}$ Torr Vakuum wurden weniger als 0,01% flüchtige Anteile nachgewiesen (nach ASTM-E595-85 und NASA SP-R0022A). Es wurde mit Hilfe eines Spin-Coating-Prozesses als 40 bzw. 50 nm dicke Schicht auf einen Siliziumwafer aufgetragen; dabei wurde als Lösungsmittel Hexamethyldisiloxan verwendet.

Für die Trägerfolie mit der siliziumorganischen plasmapolymeren Schicht 2 ergeben sich aus der XPS-Messung der Oberfläche der siliziumorganischen plasmapolymeren Schicht folgende Elementanteile:

| Silizium | 21,6 Atom-% |
|----------|-------------|
| Sauerstoff | 37,1 Atom-% |
| Kohlenstoff | 41,2 Atom-% |

## Beispiel 2: Herstellung der erfindungsgemäßen Verbundfolie

Auf die aus Beispiel 1 resultierenden Trägerfolien mit der siliziumorganischen plasmapolymeren Schicht werden folgende sechs 2K-In-Mold Coating Lacke der Fa. Bomix Chemie als Beispiel eines Beschichtungsstoffes einer erfindungsgemäßen Verbundfolie aufgebracht:

(a) A-PU-IMC 2700/2 mit Härter 29/12 (Härter-Gewichtsanteil 6%)

(b) PU-IMC 2500/512 mit Härter 28/13 (Härter-Gewichtsanteil 25%)

(c) A-PU-IMC VP 27000106 mit Härter 29/12 (Härter-Gewichtsanteil 10%)

(d) PU-IMC VP 7590005 mit Härter 26/111 (Härter-Gewichtsanteil 20%)

(e) A-PU-IMC 81460014 mit Härter 29/12 (Härter-Gewichtsanteil 6%)

(f) PU-IMC 571/357 mit Härter 27/77 (Härter-Gewichtsanteil 20%).

Als Referenzbeispiel für Beschichtungsstoffe einer nicht erfindungsgemäßen Verbundfolie wird zudem auf die aus Beispiel 1 resultierenden Trägerfolien mit der siliziumorganischen plasmapolymeren Schicht folgender 2K-In-Mold Coating Lack der Fa. Bomix Chemie aufgebracht:

(g) PU-IMC 757/737 mit Härter 26/111 (Härter-Gewichtsanteil 20%)

Es handelt sich dabei bei (a), (c) und (e) um wasserbasierte und bei (b), (d), (f) und (g) um lösemittelbasierte Polyurethan-Lacksysteme, bei denen beispielsweise die Härter 29/12 und 26/111 insbesondere aliphatische Isocyanat-Komponenten enthalten.

Die Lacke werden wie folgt deckend auf die Folie appliziert.

I. mit einer Lackierpistole durch dreimalige Applikation in einem zeitlichen Abstand von ca. 5 Minuten bis der Lack deckend ist. Bei dieser Applikation wird der Lack durch einen ausreichenden Abstand zwischen Lackierpistole und Folie relativ trocken aufgebracht, so dass es nicht zu einem Verlaufen des Lackes auf der Oberfläche kommt. Es ergeben sich typischerweise Trockenschichtdicken zwischen ca. 25 $\mu$m und ca. 60 $\mu$m (gemessen nach mindestens 24 Stunden Lagerung bei ca. 23°C).

II. Mit einem Rakel mit einer Geschwindigkeit von 40 mm/s. Beispielsweise resultiert der Auftrag des Lackes (c) mit einem 90 $\mu$m Rakel in einer Trockenschichtdicke von ca. 20 $\mu$m (gemessen nach mindestens 24 Stunden Lagerung bei ca. 23°C).

Anschließend wird der aufgebrachte Lack mit Unterstützung der Erwärmung durch einen IR-Strahler oder einem Heißluftgebläse getrocknet bzw. ausgehärtet. Es resultiert eine erfindungsgemäße Verbundfolie, welche problemlos handhabbar, wie z.B. wickel- und schneidbar, lagerfähig und auch transportfähig ist.

Der Lack (c) ist nach dem Auftrag mit einem 90 $\mu$m Rakel nach einer Lagerung von 30 Minuten bei ca. 23 °C an Luft wickelbar. Er weist dann einen Anteil von ca. 4,2 % an bis 120 °C flüchtigen Bestandteilen auf, gemessen mittels Thermogravimetrie (TGA; mit dem Gerät Q5000 V3 der Firma TA Instruments) gemäß DIN ISO EN 11358-1:2014 und DIN 51006 mit einer Einwaage von ca. 2 mg und einer Heizrate von 2 K/min (gestartet bei ca. 23°C) als Gewichtsabnahme bis 120 °C. Nach einer Lagerung von 4 Tagen bei ca. 23 °C an Luft sinkt der Anteil auf ca. 1,8 %. Nach einer Lagerung von 10 Monaten bei ca. 23 °C an Luft wird bei Lack (d) (mit einer Schichtdicke von ca. 25 $\mu$m) eine Gewichtsabnahme von ca. 0,4 % gemessen.

**Beispiel 2a: Charakterisierung der erfindungsgemäßen Verbundfolie**

Bestimmung der Bruchdehnung der erfindungsgemäßen Verbundfolien:

Aus den erfindungsgemäßen Verbundfolien aus Beispiel 1 (siehe oben) werden Normzugprüfkörper in Anlehnung an die DIN 53 504:2009-10 Schulterstab S2 ausgestanzt. Die so entstandenen Prüfkörper werden an den dafür vorgesehenen Enden in eine Zugvorrichtung eingespannt, um bei ca. 23 °C Dehnungsuntersuchungen in Anlehnung an DIN 53504:2009-10 durchzuführen

Während des Dehnvorganges wird die Oberfläche mit einem Mikroskop bei sehr geringer Vergrößerung (5 bis 50 fach) beobachtet, um unmittelbar feststellen zu können, wann der Lack reißt. Die Dehnung wird bei Raumtemperatur (ca. 23 °C) mit einer Dehnrate von ca. 15 mm/min vorgenommen.

Es ergeben sich folgende Bruchdehnungen, für den Beschichtungsstoff der erfindungsgemäßen Verbundfolien aus Beispiel 1 nach einer Lagerung bei ca. 23 °C von mindestens 7 Tagen:

Lack (a) mit einer Schichtdicke von ca. 57 $\mu$m: ca. 290 %

Lack (b) mit einer Schichtdicke von ca. 40 $\mu$m: ca. 260 %

Lack (c) mit einer Schichtdicke von ca. 20 $\mu$m: ca. 120 %

Lack (d) mit einer Schichtdicke von ca. 25 $\mu$m: ca. 30 %

Lack (e) mit einer Schichtdicke von ca. 60 $\mu$m: ca. 7 %

Lack (f) mit einer Schichtdicke von ca. 27 $\mu$m: ca. 8 %.

Für den Beschichtungsstoff einer nicht erfindungsgemäßen Verbundfolie ergibt sich folgende Bruchdehnung: Lack (g) mit einer Schichtdicke von ca. 56 $\mu$m: ca. 1 %.

Bei allen Prüfkörpern haftete der Beschichtungsstoff bis zur Bruchdehnung auf der Trägerfolie. Nach dem Bruch kam es zur Enthaftung an den Bruchkanten.

Zur direkten Bestimmung der Bruchdehnung der Beschichtungsstoffe werden von den Verbundfolien aus Beispiel 2 nach mindestens 7 Tagen Lagerung bei 23 °C die Lacke von der Folie mit plasmapolymerer Beschichtung des Beschichtungsprozess-Nr. 1 abgeschält und aus dem abgeschälten Lack Probekörper gemäß Typ 5 der DIN EN ISO 527-3:2002 hergestellt und gemäß DIN EN ISO 527-3:2002 mit einer Geschwindigkeit von ca. 15 mm/min bis zum Bruch gedehnt.

Dabei ergeben sich folgende Bruchdehnungen:

Lack (a) (Schichtdicke ca. 57 $\mu$m): ca. 310 %

Lack (b) (Schichtdicke ca. 40 $\mu$m): ca. 330 %

Lack (d) (Schichtdicke ca. 25 $\mu$m): ca. 15 %

Lack (e) (Schichtdicke ca. 60 $\mu$m): ca. 12 %.

Für den Beschichtungsstoff einer nicht erfindungsgemäßen Verbundfolie ergibt sich folgende Bruchdehnung: Lack (g) (Schichtdicke ca. 56 $\mu$m): ca. 1,5 %.

**Beispiel 3: Verwendung der erfindungsgemäßen Verbundfolie**

Beispiel 3a: Schaumbauteil

Die resultierende erfindungsgemäße Verbundfolie wird anschließend in einer Form vakuumtiefgezogen. Die Formoberfläche ist sowohl mit einer Ledernarbung versehen, als auch mit einem Schriftlogo. Der Folienverbund passt sich dieser Oberflächenstruktur problemlos an. Anschließend wird die Form mit einem PUR-Schaum (als Beispiel eines aushärtbaren Kunststoffmaterials) hinterschäumt, sodass ein 3-dimensionales Kunststoffbauteil entsteht. Nach der Fertigstellung des Schaumbauteils wird dieses zusammen mit der Folie aus der Form entnommen. Die mit der Trennschicht versehene Trägerfolie kann anschließend leicht von der Oberfläche abgezogen werden. Dabei verbleibt der Lack vollständig auf der Bauteileoberfläche. Die Ledernarbung ist vollständig abgebildet, ebenso wie das Schriftlogo.

Ein Gitterschnitttest in Anlehnung an die DIN EN ISO 2409 zeigt mit GT 0 eine sehr gute Haftung des Lackes auf dem PUR-Schaum.

Beispiel 3b: Prüfung der Verbundfolie mit einer Kegelform

Diese Verbundfolienprüfung dient dazu zu prüfen, wie sich die Verbundfolie in einer 3-dim. Form tiefziehen lässt und ob das resultierende Prüfprodukt den Anforderungen entspricht. Primär dient dieser Prüfvorgang dazu unterschiedliche Lacktypen in der Entwicklung miteinander zu vergleichen. Er kann aber auch genutzt werden, um die Grenzen der Dehnfähigkeit eines Produktes zu ermitteln.

Hierzu wird eine Vakuumtiefziehvorrichtung benützt, welche über eine Negativform mit Kegelstumpfgeometrie (Tiefziehkegel) verfügt. Die Prüf-Geometrie wird durch einen Sintermetalleinsatz (lichter Durchmesser an der Oberkante 230 mm, lichte Tiefe 72 mm, Durchmesser am Kegelboden 186 mm) ausgebildet, welcher mit der Vakuumpumpe verbunden ist.

Das zu prüfende Produkt wird mittels eines Dichtbandes über den äußeren Umfang des Kegelstumpfes befestigt, so dass eine haftfeste Abdichtung erzeugt wird. Dabei wird darauf geachtet, dass die Folie faltenfrei liegt. Anschließend wird durch den Bodeneinsatz des Tiefziehkegels die Luft evakuiert. Durch Variation des kegelförmigen Einsatzes kann die Dehnung der erfindungsgemäßen Verbundfolie auf unterschiedlichen Anforderungen exakt eingestellt und die Dehnfähigkeit der Produkte miteinander verglichen werden.

Zeigt der Lack Risse oder platzt von der Folie ab, so ist dieses Produkt für den hier eingestellten Dehnbereich nicht geeignet. Findet keine sichtbare Ablösung statt, so kann z.B. durch Hinterschäumen ein Prüfbauteil hergestellt werden, so dass dieses entnommen und die Oberfläche und das Ablöseverhalten zusätzlich beurteilt werden kann.

Für die Prüfung der erfindungsgemäßen Verbundfolien aus Beispiel 2 wurde ein Tiefziehkegel mit den Abmessungen Höhe 150 mm, Durchmesser 320 mm und Sintereinsatz Tiefe 72 mm verwendet. Alle Prüffolien überstanden den Tiefziehtest fehlerfrei. Von den hergestellten Bauteilen konnte die Trägerfolie in allen Fällen leicht abgezogen werden. Die Lackierung war gleichmäßig, geschlossen und von guter Haftfestigkeit (Gitterschnitttest: GT0).

**Patentansprüche**

1. Verbundfolie zur Beschichtungsstoffübertragung, umfassend

   a) eine Trägerfolie aus Kunststoff,
   b) einen Beschichtungsstoff, der bei 23 °C eine Bruchdehnung zwischen 5% und 800% aufweist, wobei die Bruchdehnung nach DIN EN ISO 527-1 und 527-3 gemessen wird, wobei abweichend von dieser Norm nur der Beschichtungsstoff gemessen wird, und
   c) eine siliziumorganische Schicht, die zwischen der Trägerfolie und dem Beschichtungsstoff angeordnet ist wobei die Haftfestigkeit zwischen der siliziumorganischen Schicht und dem Beschichtungsstoff nach Aushärtung des Beschichtungsstoffes kleiner ist, als die Haftfestigkeit zwischen der siliziumorganischen Schicht und der Trägerfolie.

2. Verbundfolie nach Anspruch 1, wobei der in Schritt b) bereitgestellte Beschichtungsstoff vollständig ausgehärtet ist und wobei der Beschichtungsstoff nach Dehnung gemeinsam mit der Trägerfolie um 5% an der Trägerfolie haften bleibt, wobei zur Ermittlung der Haftung von der Verbundfolie Normzugprüfkörper in Anlehnung an die DIN 53 504:2009-10 Schulterstab S2 ausgestanzt werden und die Prüfkörper an den dafür vorgesehenen Enden in eine Zugvorrichtung eingespannt und bei ca. 23 °C in Anlehnung an die DIN 53 504:2009-10 mit einer Dehnrate von 15mm/min gedreht werden.

3. Verbundfolie nach Anspruch 1 oder 2, wobei die siliziumorganische Schicht eine plasmapolymere Schicht ist.

4. Verbundfolie nach einem der vorangehenden Ansprüche, wobei der Beschichtungsstoff einen Stoff umfasst, ausgewählt aus der Gruppe bestehend aus Primer, Füller, Druckfarbe und Lack, bevorzugt Basislack, Decklack und/oder Klarlack.

5. Verbundfolie nach einem der vorangehenden Ansprüche, wobei die siliziumorganische Schicht folgende Stoffmengenverhältnisse gemessen mittels XPS aufweist:

$$0{,}95 \;\leq\; n(O + N) : n(Si) \;\leq\; 2{,}10$$

$$1{,}50 \;\leq\; n(C) : n(Si) \;\leq\; 2{,}90$$

$$0{,}90 \;\leq\; n(C) : n(O + N) \;\leq\; 2{,}5$$

6. Verbundfolie nach einem der vorangehenden Ansprüche, wobei die siliziumorganische Schicht folgende Elementanteile umfasst, bezogen auf die Summe der Elemente Silizium, Sauerstoff, Stickstoff und Kohlenstoff als 100 Atom-%, gemessen mittels XPS:

| | |
|---|---|
| Silizium | 17 bis 25 Atom-% |
| (Sauerstoff + Stickstoff) | 20 bis 39 Atom-% |
| Kohlenstoff | 38 bis 62 Atom-% |

7. Verbundfolie nach einem der vorangehenden Ansprüche, wobei die Trägerfolie nach DIN EN ISO 527 bei einer Temperatur von 40 °C eine Spannung bei 50% Dehnung von maximal 80 MPa aufweist und bei einer Temperatur von 80 °C eine Spannung bei 50% Dehnung von maximal 40 MPa aufweist.

8. Verbundfolie nach einem der vorangehenden Ansprüche, wobei die Trägerfolie

   - eine Dicke von 10 $\mu$m bis 200 $\mu$m besitzt
   und/oder
   - mehrlagig aufgebaut ist.

9. Verbundfolie nach einem der vorangehenden Ansprüche, wobei die Trägerfolie ein Blockcopolymer umfasst oder daraus besteht.

10. Verbundfolie nach Anspruch 9, wobei das Blockcopolymer ausgewählt ist aus der Gruppe bestehend aus Copolyestern, Copolyamiden, Polyolefin-Copolymeren und Polyesterurethan-Copolymeren, besonders bevorzugt aus der der Gruppe bestehend aus Copolyestern und Polyesterurethan-Copolymeren, weiter bevorzugt aus Copolyestern.

11. Verbundfolie nach einer der vorangehenden Ansprüche, wobei der Kunststoff der Trägerfolie kristalline und amorphe Mikrophasen umfasst, wobei die amorphen Mikrophasen weiter bevorzugt elastomeren Charakter aufweisen.

12. Verwendung einer Verbundfolie nach einem der vorangehenden Ansprüche zur Übertragung eines Beschichtungsstoffes auf ein Kunststoffbauteil, wobei die Verbundfolie in einer Form tiefgezogen oder durch den Materialdruck an die Formwandung gepresst wird.

13. Verfahren zur Herstellung einer Verbundfolie nach einem der Ansprüche 1 bis 11, umfassend die Schritte:

   a) Bereitstellen oder Herstellen einer Trägerfolie aus Kunststoff,
   b) Aufbringen einer siliziumorganischen Schicht auf die Trägerfolie,
   c) Aufbringen eines Beschichtungsstoffes auf die siliziumorganische Schicht und
   d) Aushärten des Beschichtungsstoffes, so dass dieser bei 23 °C eine Bruchdehnung zwischen 5% und 800% aufweist, wobei die Bruchdehnung nach DIN EN ISO 527-1 und 527-3 gemessen wird, wobei abweichend von dieser Norm nur der Beschichtungsstoff gemessen wird, und
   wobei die siliziumorganische Schicht zwischen der Trägerfolie und dem Beschichtungsstoff angeordnet ist und wobei die Haftfestigkeit zwischen der siliziumorganischen Schicht und dem Beschichtungsstoff nach Aushärtung des Beschichtungsstoffes kleiner ist, als die Haftfestigkeit zwischen der siliziumorganischen Schicht und der Trägerfolie.

**14.** Verfahren zur Herstellung eines beschichteten Kunststoffbauteiles, umfassend die Schritte:

a) Bereitstellen oder Herstellen einer Verbundfolie nach einem der Ansprüche 1 bis 11,
b) Bereitstellen einer Form für das Kunststoffbauteil,
c) Anpassen, der Verbundfolie in die Form, so dass der Beschichtungsstoff von der Form weg zeigt und
d) Aufbringen eines aushärtbaren Kunststoffmaterials oder einer thermoplastischen Kunststoffmasse für das Kunststoffbauteil auf die Verbundfolie.

**Claims**

**1.** Composite film for coating material transfer, comprising

a) a carrier film of plastic,
b) a coating material having an elongation at break at 23°C of between 5% and 800%, the elongation at break being measured according to DIN EN ISO 527-1 and 527-3 with measurement of the coating material only, in deviation from said standard, and
c) a silicon-organic layer, disposed between the carrier film and the coating material,
wherein the adhesive strength between the silicon-organic layer and the coating material after curing of the coating material is less than the adhesive strength between the silicon-organic layer and the carrier film.

**2.** Composite film according to Claim 1, wherein the coating material provided in step b) is fully cured and wherein the coating material, after stretching together with the carrier film by 5%, remains adhering on the carrier film, wherein the adhesion of the composite film is ascertained by punching out standard tensile test specimens in accordance with DIN 53 504:2009-10 S2 dumbbell and the test specimens are clamped by the ends intended for that purpose into a tensile apparatus and are turned at around 23°C in accordance with DIN 53 504:2009-10 at a stretching rate of 15 mm/min.

**3.** Composite film according to Claim 1 or 2, wherein the silicon-organic layer is a plasma-polymeric layer.

**4.** Composite film according to any of the preceding claims, wherein the coating material comprises a substance selected from the group consisting of primer, surfacer, printing ink and surface-coating material, preferably basecoat, topcoat and/or clearcoat material.

**5.** Composite film according to any of the preceding claims, wherein the silicon-organic layer has the following amount-of-substance ratios, measured by means of XPS:

$$0.95 \leq n(O + N) : n(Si) \leq 2.10$$

$$1.50 \leq n(C) : n(Si) \leq 2.90$$

$$0.90 \leq n(C) : n(O + N) \leq 2.5$$

**6.** Composite film according to any of the preceding claims, wherein the silicon-organic layer comprises the following element fractions, based on the sum of the elements silicon, oxygen, nitrogen and carbon as 100 atom%, measured by means of XPS:

| silicon | 17 to 25 atom% |
|---|---|
| (oxygen + nitrogen) | 20 to 39 atom% |
| carbon | 38 to 62 atom%. |

**7.** Composite film according to any of the preceding claims, wherein the carrier film according to DIN EN ISO 527 has a stress of 50% elongation of not more than 80 MPa at a temperature of 40°C and has a stress at 50% elongation of not more than 40 MPa at a temperature of 80°C.

8. Composite film according to any of the preceding claims, wherein the carrier film

   - possesses a thickness of 10 $\mu$m to 200 $\mu$m
   and/or
   - is of multi-ply construction.

9. Composite film according to any of the preceding claims, wherein the carrier film comprises or consists of a block copolymer.

10. Composite film according to Claim 9, wherein the block copolymer is selected from the group consisting of copolyesters, copolyamides, polyolefin copolymers and polyesterurethane copolymers, especially preferably from the group consisting of copolyesters and polyesterurethane copolymers, more preferably from copolyesters.

11. Composite film according to any of the preceding claims, wherein the plastic of the carrier film comprises crystalline and amorphous microphases, the amorphous microphases more preferably being elastomeric in nature.

12. Use of a composite film according to any of the preceding claims for transferring the coating material to a plastics component, wherein the composite film is thermoformed in a mould or pressed by the pressure of material against the mould walls.

13. Method for producing a composite film according to any of Claims 1 to 11, comprising the following steps:

   a) providing or producing a carrier film of plastic,
   b) applying a silicon-organic layer to the carrier film,
   c) applying a coating material to the silicon-organic layer, and
   d) curing the coating material so that at 23°C it has an elongation at break of between 5% and 800%, the elongation at break being measured according to DIN EN ISO 527-1 and 527-3 with measurement of the coating material only, in deviation from said standard, and
   wherein the silicon-organic layer is disposed between the carrier film and the coating material, and wherein the adhesive strength between the silicon-organic layer and the coating material after curing of the coating material is less than the adhesive strength between the silicon-organic layer and the carrier film.

14. Method for producing a coated plastics component, comprising the following steps:

   a) providing or producing a composite film according to any of Claims 1 to 11,
   b) providing a mould for the plastics component,
   c) adjusting the composite film in the mould, so that the coating material points away from the mould, and
   d) applying a curable plastics material or a thermoplastics composition for the plastics component to the composite film.

**Revendications**

1. Film composite pour le transfert de matériau de revêtement, comprenant

   a) un film de support en matière plastique,
   b) un matériau de revêtement, qui présente à 23 °C un allongement à la rupture entre 5 % et 800 %, dans lequel l'allongement à la rupture est mesuré selon la norme DIN EN ISO 527-1 et 527-3, dans lequel, contrairement à ladite norme, seulement le matériau de revêtement est mesuré, et
   c) une couche organique à base de silicium, qui est disposée entre le film de support et le matériau de revêtement, dans lequel la force d'adhérence entre la couche organique à base de silicium et le matériau de revêtement est inférieure, après le durcissement du matériau de revêtement, à la force d'adhérence entre la couche organique à base de silicium et le film de support.

2. Film composite selon la revendication 1, dans lequel le matériau de revêtement fourni lors de l'étape b) est totalement durci et dans lequel le matériau de revêtement continue à adhérer après l'allongement conjointement avec le film de support de 5 % au niveau du film de support, dans lequel, pour déterminer l'adhérence du film composite, des corps de vérification de traction standard sont découpés en s'appuyant sur la norme DIN 53 504:2009-10 barre d'épaulement S2 et les corps de vérification sont introduits par serrage au niveau des extrémités prévues à cet effet dans un dispositif de traction et sont tournés à environ 23 °C en s'appuyant sur la norme DIN 53 504:2009-10 à une vitesse d'allongement de 15 mm/min.

3. Film composite selon la revendication 1 ou 2, dans lequel la couche organique à base de silicium est une couche de polymère plasma.

4. Film composite selon l'une quelconque des revendications précédentes, dans lequel le matériau de revêtement comprend un matériau choisi parmi le groupe constitué d'apprêt, de mastic, d'encre d'impression et de vernis, de manière préférée de vernis de base, de vernis de recouvrement et/ou de vernis transparent.

5. Film composite selon l'une quelconque des revendications précédentes, dans lequel la couche organique à base de silicium présente des rapports de quantités de matériau suivants mesurés au moyen d'une XPS :

$$0,95 \leq n(O + N) : n(Si) \leq 2,10$$

$$1,50 \leq n(C) : n(Si) \leq 2,90$$

$$0,90 \leq n(C) : n(O + N) \leq 2,5.$$

6. Film composite selon l'une quelconque des revendications précédentes, dans lequel la couche organique à base de silicium comprend des fractions d'élément suivantes, par rapport à la somme des éléments silicium, oxygène, azote et carbone, en tant que 100 % atom. mesurées au moyen d'une XPS :

| silicium | 17 à 25 % atom. |
|---|---|
| (oxygène + azote) | 20 à 39 % atom. |
| carbone | 38 à 62 % atom. |

7. Film composite selon l'une quelconque des revendications précédentes, dans lequel le film de support présente selon la norme DIN EN ISO 527, à une température de 40 °C, une tension pour un allongement de 50 % de 80 MPa au maximum et, à une température de 80 °C, une tension pour un allongement de 50 % de 40 MPa au maximum.

8. Film composite selon l'une quelconque des revendications précédentes, dans lequel le film de support

   - possède une épaisseur de 10 μm à 200 μm et/ou
   - présente une structure multicouche.

9. Film composite selon l'une quelconque des revendications précédentes, dans lequel le film de support comprend un copolymère séquencé ou en est constitué.

10. Film composite selon la revendication 9, dans lequel le copolymère séquencé est choisi parmi le groupe constitué de copolyesters, de copolyamides, de copolymères de polyoléfine et de copolymères de polyester uréthane, de manière particulièrement préférée parmi le groupe constitué de copolyesters et de copolymères de polyester uréthane, de manière davantage préférée de copolyesters.

11. Film composite selon l'une quelconque des revendications précédentes, dans lequel la matière plastique du film de support comprend des microphases cristallines et amorphes, dans lequel les microphases amorphes présentent de manière davantage préférée un caractère élastomère.

12. Utilisation d'un film composite selon l'une quelconque des revendications précédentes, pour le transfert d'un matériau de revêtement sur un composant en matière plastique, dans laquelle le film composite est embouti dans un moule ou est pressé par la pression de matériau au niveau de la paroi de moule.

13. Procédé de fabrication d'un film composite selon l'une quelconque des revendications 1 à 11, comprenant les étapes :

a) de fourniture ou de fabrication d'un film de support en matière plastique,
b) d'application d'une couche organique à base de silicium sur le film de support,
c) d'application d'un matériau de revêtement sur la couche organique à base de silicium, et
d) de durcissement du matériau de revêtement de sorte que celui-ci présente à 23 °C un allongement à la rupture entre 5 % et 800 %, dans lequel l'allongement à la rupture est mesuré selon la norme DIN EN ISO 527-1 et 527-3, dans lequel, contrairement à la présente norme, seulement le matériau de revêtement est mesuré, et
dans lequel la couche organique à base de silicium est disposée entre le film de support et le matériau de revêtement et dans lequel la force adhérence entre la couche organique à base de silicium et le matériau de revêtement est, après le durcissement du matériau de revêtement, inférieure à la force d'adhérence entre la couche organique à base de silicium et le film de support.

14. Procédé de fabrication d'un composant en matière plastique revêtu, comprenant les étapes :

a) de fourniture ou de fabrication d'un film composite selon l'une quelconque des revendications 1 à 11,
b) de fourniture d'un moule pour le composant en matière plastique,
c) d'adaptation du film composite dans le moule de sorte que le matériau de revêtement pointe de manière à s'éloigner du moule, et
d) d'application d'un matériau en matière plastique durcissable ou d'une masse de matière plastique thermoplastique pour le composant en matière plastique sur le film composite.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007010071 A1
- WO 2013160437 A1
- WO 2014124945 A1
- WO 2014083732 A1
- EP 1177875 A1
- EP 1304235 A1
- EP 0573676 A1
- WO 1993026143 A1


**In der Beschreibung aufgeführte Nicht-Patentliteratur**

- **D. H. KAELBLE.** Dispersion-Polar Surface Tension Properties of Organic Solids. *J. Adhesion,* 1970, vol. 2, 66-81
- **D. OWENS ; R. WENDT.** Estimation of the Surface Free Energy of Polymers. *J. Appl. Polym. Sci,* 1969, vol. 13, 1741-1747
- **W. RABEL.** Einige Aspekte der Benetzungstheorie und ihre Anwendung auf die Untersuchung und Veränderung der Oberflächeneigenschaften von Polymeren. *Farbe und Lack,* 1971, vol. 77 (10), 997-1005
- **H. YASUDA.** Plasma Polymerization. Academic Press, Inc, 1985
- **VON STEFANIE WALD.** Optimierung und Bewertung plasmapolymerer Barriereschichten durch einen alternierenden Aufbau im Rolle-zu-Rolle PE-CVD-Verfahren. Cuvillier Verlag, 2015